# EUROPEAN PATENT APPLICATION

(11) **EP 4 571 556 A1**
(43) Date of publication of application: **18.06.2025**
(21) Application number: 24182250.1
(22) Date of filing: 14.06.2024
(51) Int. Cl.: G06F 21/62, G06N 3/0475, H04L 41/16, G06F 8/30, G06N 20/00

(54) **SYSTEM AND METHOD FOR SOURCE CODE TRANSFORMATION**

(30) Priority: 12.12.2023 US 202318536719
(71) Applicant: McAfee, LLC, San Jose, CA 95002 (US)
(72) Inventor: RUDNIK, Lior, Dublin, 94568 (US)
(74) Representative: Maiwald GmbH

(57) **Abstract**

There is disclosed herein a method of providing protected access to a third-party generative artificial intelligence (GAI) for software development including transforming a source code input (a transformed source code) via a one-way transform, wherein an enterprise has a proprietary interest in the source code input, and wherein the one-way transform is not internally reversible; providing the transformed source code to the third-party GAI, in association with a query for the third-party GAI, wherein the third-party GAI is controlled by a party other than the enterprise; receiving from the third-party GAI a response to the query; and presenting the response to a human user via a human interface device (HID).

## Description

### Cross Reference to Related Applications

This Application claims priority to U.S. Provisional Application 63/523,399, titled "System and Method for Obfuscating Source Code," filed 27 June 2023, which is incorporated herein by reference in its entirety.

### Field of the Specification

This application relates in general to data leakage prevention, and more particularly though not exclusively to a system and method for source code transformation.

### Background

Generative artificial intelligence (GAI) is a form of AI that uses a large language model (LLM) to create responses to queries that mimic human speech. In one use case, programmers/developers use GAI to help complete, debug, or otherwise improve code.

### Brief Description of the Drawings

The present disclosure is best understood from the following detailed description when read with the accompanying FIGURES. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion. Furthermore, the various block diagrams illustrated herein disclose only one illustrative arrangement of logical elements. Those elements may be rearranged in different configurations, and elements shown in one block may, in appropriate circumstances, be moved to a different block or configuration.
**FIGURE 1** is a block diagram of selected elements of a software development ecosystem.
**FIGURE 2** is a block diagram of selected elements of a GAI pipeline.
**FIGURE 3** is a block diagram of selected elements of an integrated development environment.
**FIGURE 4** is a block diagram illustration of selected elements of a graphical user interface.
**FIGURE 5** is a block diagram of selected elements of a code input window.
**FIGURE 6** shows example output from the GAI model.
**FIGURE 7** is a block diagram of selected elements of a code transformation module.
**FIGURE 8** is a block diagram of selected elements of a hardware platform.
**FIGURE 9** is a block diagram of selected elements of a system-on-a-chip (SoC).
**FIGURE 10** is a block diagram of selected elements of a trusted execution environment (TEE).
**FIGURE 11** is a block diagram of selected elements of a network function virtualization (NFV) infrastructure.
**FIGURE 12** is a block diagram of selected elements of a containerization infrastructure.

### Summary

There is disclosed herein a method of providing protected access to a third-party generative artificial intelligence (GAI) for software development including transforming a source code input (a transformed source code) via a one-way transform, wherein an enterprise has a proprietary interest in the source code input, and wherein the one-way transform is not internally reversible; providing the transformed source code to the third-party GAI, in association with a query for the third-party GAI, wherein the third-party GAI is controlled by a party other than the enterprise; receiving from the third-party GAI a response to the query; and presenting the response to a human user via a human interface device (HID).

### Embodiments of the Disclosure

The following disclosure provides many different embodiments, or examples, for implementing different features of the present disclosure. Specific examples of components and arrangements are described below to simplify the present disclosure. These are, of course, merely examples and are not intended to be limiting. Further, the present disclosure may repeat reference numerals and/or letters in the various examples. This repetition is for the purpose of simplicity and clarity and does not in itself dictate a relationship between the various embodiments and/or configurations discussed. Different embodiments may have different advantages, and no particular advantage is necessarily required of any embodiment.

### Overview

Generative AI (GAI) interfaces have recently become enormously popular for many uses. Users may query GAI large language model (LLM) networks to ask questions, help write speeches or papers, and check for grammatical or spelling errors. Another beneficial use of a GAI is that software engineers can use these tools to check code for errors or even to ask the GAI to generate blocks of source code in a specified language given a description of the functionality of the code. GAI can also aid other software engineering tasks such as testing and documentation. These features can greatly increase productivity, reduce the number of bugs, and speed up production of important product lines.

Another common issue with GAI usage arises in the professional or enterprise context, in which a programmer working for a company may query a GAI for help with source code, and in the process, may provide the GAI with proprietary, classified, or otherwise access-controlled information. The user may do this purposely or inadvertently. Not all users may realize, recognize, or understand the gravity of providing proprietary company data to a GAI.

Most GAIs are iteratively trained by their operators using inputs and feedback to improve the quality of the GAI. This improves and trains the GAI model, which can lead to a serious risk of intellectual property (IP) leakage. LLMs are essentially predictive text models, and when source code is provided to the GAI and improved through interactions with the GAI, that same source code may be repeated back verbatim to another user. Thus, the GAI "learns" the company's secrets and may later leak those secrets to a competitor as an answer to a different question.

Leakage of sensitive information is an emerging and growing concern among users of popular GAIs such as ChatGPT, Google Bard, and various AI offerings from Microsoft and others. One survey found that a substantial percentage of employees had pasted company data into a GAI interface. Of those company data, 11% were found to be sensitive data, which could include confidential information, intellectual property, client data, source code, financials, classified information, or other regulated information. Depending on the use case, such data leakage could be against company policy or even illegal. In one notable instance, engineers shared sensitive corporate information with an AI chatbot to find errors in semiconductor code, optimized source code, and summarized meeting notes.

Because of the severe danger of data leakage, many corporations have banned the use of GAIs in corporate work and may even block them via their firewalls. While this can help to mitigate data leakage issues, it may not be a complete solution. For example, if a GAI is blocked by firewall policy on a corporate network, users may decide to copy portions of the source code and take them home to query a GAI on their home computers. Furthermore, even if the corporation has perfect data control policies that completely block users from any use of GAI, those corporations also miss out on the legitimate benefits of GAI. Such a corporation may be at a competitive disadvantage compared to other companies that permit at least some access to GAIs to speed workflows.

Thus, GAI usage may be both permissible and even desirable in a corporate context provided that sufficient controls are in place to prevent leakage of sensitive information when the GAI is used. To this end, some companies have contracted with GAI providers for internal access-controlled GAI interfaces. The enterprises may have a contract that prevents the GAI solution provider from including corporate inputs in their training data. These terms and conditions can help prevent leakage. Furthermore, some GAI providers optionally allow users to prevent their inputs from being used as training data. But absent a large corporate contract, such opt-outs are often turned off by default. Furthermore, whether in a corporate context or an individual context, even with a promise not to include inputs in the training model, the leaked information may be stored by the GAI service provider for a given period such as 30 to 60 days, such as for moderation purposes. Furthermore, the contracting corporation is relying on the GAI provider's good faith adherence to the contract to ensure that data leakage does not occur. Furthermore, there is a risk that the GAI provider may suffer a cyber-attack, which may leak the temporarily-stored IP. And even if the corporation can solve these issues with the GAI provider, the corporation is locked into a contract with a single GAI provider. Users may observe that certain GAI models are more useful for given tasks than others. Furthermore, to mitigate hallucination and to better ensure quality of work, engineers or others may wish to use multiple GAIs to crosscheck one another's results.

The present specification provides a system and method for sanitized access to a GAI interface, providing users the benefit of multiple GAIs while preventing leakage of sensitive information. The present method provides a species of code obfuscation that employs a nonreversible transform function to convert source code inputs into a transformed/obfuscated source code that can be shared with the GAI. The transformed source code is stripped of potentially-sensitive information such as internal function names, variable names, string literals, and/or explicit numerical values. A one-way non-reversible function may be used to transform these values into nonce values that are not human readable. The transform function may be a form of hash, some other determinate function, or may be random or pseudo-random.

The nonce values at the output of the transform function are, by design, nonsense to any human observer. They provide little to no useful information about the source code, but the source code retains its structure and flow. For example, the following code function may be transformed as follows.

Source code input:

```
 #include "databaseobject.h"
 namespace MyProject {
 DatabaseObject::DatabaseObject (const QString &tableName, const
 QString &keyField, int keyValue, QObject *parent, QSqlDatabase
 db)
 : QSqlTableModel(parent, db)
 {
    //[RELAY] 1. Initialize member variables (if needed)
    //[RELAY] 2. Setup filter to select the record from tableName
    where
    //[RELAY] 3. Fetch the record from the database
    // [RELAY] 4. Assign the record(s) to the member variable
 record
 } //DatabaseObject constructor
 } // namespace MyProject
```

In this example, the directive "[RELAY]" indicates that the comment should be relayed to the GAI. This may be useful in some embodiments, because the transform function may strip out comments from the source code, as comments often include explanations and substantive information that may leak proprietary data. Alternatively, the instructions of what is to be done need not be provided as comments, since the GAI is not a compiler and may understand that the enumerated items are requests for code completion.

The transformed or obfuscated source code may appear as follows:

```
 #include "hBjJqQOUc.h"
 namespace UZPAkDDoq {
  
 hBjJqQOUc:: hBjJqQOUc (const QString &CID1RQZUA, const QString
 &zsgyuGXtp, int ThlpECBWB, QObject *parent, QSqlDatabase db)
 : QSqlTableModel(parent, db)
 {
    // 1. Initialize member variables (if needed)
    // 2. Setup filter to select the record from CID1RQZUA
    // 3. Fetch the record from the database
    // 4. Assign the record(s) to the member variable record
 (inherits from QSqlTableModel)
 } // hBjJqQOUc constructor
 } // namespace UZPAkDDoq
```

A response from the GAI may appear as:

```
 #include " UZPAkDDoq.h"
  
 namespace MyProject {
 hBjJqQOUc:: hBjJqQOUc (const QString & CIDlRQZUA, const QString
 &zsgyuGXtp, int ThlpECBWB, QObject *parent, QSqlDatabase db)
 : QSqlTableModel(parent, db)
 {
    // 1. Initialize member variables (if needed)
  
    // 2. Setup filter to select the record from CIDlRQZUA where
 zsgyuGXtp == ThlpECBWB
    setTable(CID1RQZUA) ;
    setFilter(zsgyuGXtp + " = " + QString::number(ThlpECBWB));
  
    // 3. Fetch the record from the database
    select(); // This will populate the model with the selected
 record(s)
  
    // 4. Assign the record(s) to the member variable record
    if (rowCount() == 1) {
        // If there is exactly one matching record, assign it to
 your member variable
        record = this->record(0); // Assuming record is a member
        variable of type QSqlRecord
    } else {
        // Handle the case where there are multiple matching
 records or none at all
        // You may want to log an error or take appropriate action}
 } // hBjJqQOUc constructor
  
 } // namespace UZPAkDDoq
```

This response may be reverse transformed, as follows:

```
 #include "databaseobject.h"
  
 namespace MyProject {
  
 DatabaseObject::DatabaseObject (const QString &tableName, const
 QString &keyField, int keyValue, QObject *parent, QSqlDatabase
 db)
 : QSqlTableModel(parent, db)
 {
    // 1. Initialize member variables (if needed)
  
    // 2. Setup filter to select the record from tableName where
 keyField == keyValue
    setTable(tableName) ;
    setFilter(keyField + " = " + QString::number(keyValue));
  
    // 3. Fetch the record from the database
    select(); // This will populate the model with the selected
 record(s)
  
    // 4. Assign the record(s) to the member variable record
    if (rowCount() == 1) {
        // If there is exactly one matching record, assign it to
 your member variable
        record = this->record(0); // Assuming record is a member
        variable of type QSqlRecord
    } else {
        // Handle the case where there are multiple matching
 records or none at all
        // You may want to log an error or take appropriate action
    }
 }
 } // namespace MyProject
```

In this example, a fixed-length 9-character random substitution is used for variable names. This class is based on the Qt C++ framework, and since the Qt class and variable names are publicly available, there is no need to transform those. Indeed, maintaining those symbols may help to provide useful context to the GAI. In an example, the system may search the source code input for symbols that are defined in header files that are provided out-of-the box with the framework. Similar methods may be used for other languages that do not use C++ header files (e.g., JavaScript "exports" symbols, PHP "requires" certain files, and similar).

In yet another example, a sample of Python source code may be transformed as follows.

Original Sample:

```
 import json
 # =Some Comment =================
 big_secret = "http://www.mcafee.com/secret_api"
 small_secret = {"pass": "123456"}
 set_sec = {1, 2, 3, 3, 0, False}
 lst_sec = ['a', 2, 3]
 tup_sec = ("abc", 23, 34, 45)
 cert = "some certificate hex string or file reference
 /path/to/secrete/file"
  
 def check_secrete(sec="some_secrete", and_num=42):
    clue = os.path.basename(os.path.normpath(big_secret))
    url = clue + str(small_secret) + cert + sec + str(and_num)
    if len(url) > 7:
        return True
    return False
  
 class secret_encryptor:
    cert = "something certificate like"
    def enc(self, val):
        return val + cert
```

Transformed Sample:

```
 import json
 3bfe4a23 = 'c728cf6b'
 67ba3c3f = {'d097adeb': '69d630f0'}
 fe1f0451 = {1, 2, 3, 3, 0, False}
 c378ffdf = ['25190a4b', 2, 3]
 fac9f3a3 = ('10d9aec3', 23, 34, 45)
 a04082da = 'e28b02d2'
  
 def e7d7e954(fd7aelbb='24a5707f', 23054alf=42):
    55bb2346 = os.path.basename(os.path.normpath(3bfe4a23))
    fd7a8b4a = 55bb2346 + str(67ba3c3f) + a04082da + fd7aelbb +
 str(23054a1f)
    if len(fd7a8b4a) > 7:
        return True
    return False
  
 class 770ac940:
    a04082da = '6fd6063e'
  
    def 4114fec4(d97497d1, 35b40222):
        return 35b40222 + a04082da
```

The randomized variable substitutions, function names, string values, and numbers may have no information from which the original data may be derived. To perform the reverse transform, the system maintains a transformation symbols store or table (TSS), which includes mappings to indicate which transformation symbols correspond to which items in the original source code input. The TSS may be hosted locally on the developer device, to help avoid leakage of information. Alternatively, the transformation symbols store may be hosted on an enterprise or cloud service, which may enable code sharing between different developers. An appropriate function such as search/replace can be used to complete the reverse transform. Once a working session is complete, TSS may be purged, as it is intended to function in a temporary role, for example on a session basis. Furthermore, it may be unnecessary in at least some embodiments to back up or preserve the TSS. If the information is lost, a new TSS can be built on the next session. In case of data loss of the TSS, the only loss is of any responses to queries that GAI has served before the response could be reverse transformed. In that case, it may be fairly straightforward to simply re-issue the queries to the GAI and build a new TSS.

This method provides sufficient information to the GAI for the GAI to provide a useful output, but without disclosing potentially-sensitive information. The transformed source code may even be compilable, although it may provide useless or nonsense outputs if compiled. Furthermore, any attempt to link the transformed source code may also fail.

This is a form of code obfuscation that can gain the benefit of a GAI input without disclosing to the GAI any useful or proprietary information. The computer that provides the query may maintain in memory a transformation symbols store which can be used to reverse the transform. Thus, when the present specification speaks of the transform as being nonreversible, this should be understood to indicate that the transform is internally nonreversible. For example, variable names, string literals, and internal function call names can be converted via a randomizer or a one-way hashing algorithm that provides a hexadecimal output that is meaningless to a human. This one-way hash value cannot be used to determinatively reverse the transform and infer the string that provided the hash. But with the transformation symbols store that the querying computer maintains, it is simple and straightforward to look up each transformed symbol and convert it back to the original string that provided the symbol. The transformation symbols store may be maintained only in nonvolatile memory. It may not be necessary to back up or protect the transformation symbols store from loss because the querying computer has access to the original source code. Thus, the querying computer can regenerate the transformed source code and resubmit the query if necessary, as in the case of a sudden power failure.

Indeed, in some cases, it may not be necessary or even desirable to be able to generate the identical transformed source code again. For example, if a user makes multiple queries using an identical transform, then it is possible that an attacker, competitor, or malicious actor may glean some kind of useful or usable information from the repeated queries with identical information in the transformed source code. Thus, in some embodiments, the transformed source code may come from a hash that is seeded or otherwise randomized so that multiple generations from the same source code are not identical. In an example, same symbol transformations are used between multiple queries within the same session, so that the developer can ask follow-up questions without confusing the GAI with different symbol names. In those cases, the transform may include looking up symbols that have already been transformed in the same session, and reusing the same transformation.

This method provides a form of source code obfuscation, although the usage of that term here is somewhat different than in common practice. Code obfuscation, as commonly applied in cybersecurity contexts, refers to the process of modifying a build process to produce an executable that is no longer useful to a hacker. For example, code obfuscation makes it difficult to decompile the executable back into a human readable source code form. Code obfuscation may randomize the names of variables, function calls, or other strings to make it more difficult to deduce the function of those variables and strings. However, one key feature of known code obfuscation is to produce software that both compiles and is fully functional. In an ideal known code obfuscation process, the output of the obfuscated code will be identical to the output of non-obfuscated code. Thus, the code is functionally identical but more difficult to reverse engineer. The methods used herein are distinguishable in that there is no attempt to maintain identity of function between the original source code and the transformed source code provided to the GAI. The transformed source code may compile but may not link, and even if it does compile and link, may core dump or provide garbage output. This is acceptable or possibly even desirable because the purpose is simply to provide the GAI with the appropriate structure to evaluate without leaking proprietary information.

The system and method of the present specification transforms a source code input into an equivalent transformed source code that can be evaluated by a GAI without leaking proprietary or sensitive data. The present method uses a nonreversible transform which is internally nonreversible. This destroys any IP inherent in the source code. The transformed source code preserves compatible syntax but may not be runnable because of the value changes. The code transformation may also obfuscate initial conditions or specific configurations, which may be specific to the company or its IP. Any output of the executable is destroyed, and a compiled output program is expected to crash or produce garbage output.

This enables corporations and their employees to reap the benefits of generative AI by safely sharing a version of the company's source code, which contains sensitive information, with third-party GAI providers. This can give the company and its employees massive productivity gains for tasks such as software engineering. This solution also leverages users' experience with GAI to receive best results. For example, a user who is accustomed to querying multiple GAIs or who has a preferred GAI for a particular task can use those same methods without fear of leaking company proprietary or other sensitive data.

The present system and method may become an enabling layer that allows users to fully leverage the productivity gains of GAI. They can optimize source code, find bugs, build test cases, document the code, evaluate GAI results alongside company code on company private machines, compare results for multiple GAI services, and continually evaluate code in the background to provide analysis.

In one illustrative example, the software is embodied as a plug-in to an integrated development environment (IDE), which can run in the background and provide a simple query window for the programmer to paste queries about the code. The IDE plug-in can also continuously analyze the code by converting sections of the code that the programmer is viewing or working on into transformed source code and automatically submitting the transformed source code to the GAI for error checking. Alternatively, the software may run as an independent tool or app. In either case, when the software receives input source code, either manually from the programmer or automatically from the IDE, the system transforms the source code and submits the transformed source code to the GAI along with an appropriate query.

When the software receives a response from the GAI, it uses the transformation symbols store/table to reverse the transform and present the output to the human user via a human interface device (HID) such as a monitor or other output device.

In an example, code transformation comprises modifying the source code by removing all variable and function names along with string literals in the code. These may carry human meaning and therefore may leak IP. In some cases, common logical values such as true/false or common numbers such as -1, 0, 1, or known error codes may be retained so that meaning is not lost. In some embodiments, a configurable strictness flag is also provided. The strictness flag may control whether all numbers beyond those common logical values are transformed. This may be optional because pure numbers often have little meaning on their own and removing them might hinder the AI from giving high-quality responses. In an embodiment, the programmer has the option to mark specific lines or blocks of code as "sensitive code." The strictness flag may be set specifically and applied to those lines.

Conversely, a "lazy" flag may also be set for certain lines of code, indicating that those specific lines of code should not be transformed. This may be used in cases where the symbols in the selected code are unlikely to leak sensitive data, but provide useful context for the GAI to help its evaluation. In an embodiment, a user interface (UI) to set the "lazy" flag on given lines of code is deliberately narrow. For example, the user may be barred from selecting multiple lines of code, multiple functions/classes, or multiple symbols at a time. This forces the user to think carefully about which symbols to mark for lazy evaluation, and avoids cases where a user marks a full block of code, forgetting or not realizing that it contains sensitive symbols or information. In an example, the UI may periodically (e.g., daily, weekly, monthly) clear all lazy flags, and may include an easy way for the user to view set lazy flags. The system may also occasionally (e.g., daily, weekly, monthly) send a list of lazy symbols to an administrator for audit purposes.

During the transformation, the modified values may be random or semirandom hex strings, or a hexadecimal hash which may optionally be seeded to prevent recurrence. Many programming languages permit only alphabetic characters and underscores in variable names. Thus, to optionally preserve compilability (and to avoid the GAI complaining that the variable names are invalid), a substitution code may be used to convert hexadecimal values to pure alphabetic values. For example, the digits 0-9 may be replaced with the capital letters A - I (since hexadecimal can be fully represented using only lowercase letters), or may be replaced with the next ten letters of the alphabet after "f" (e.g., g - p). Since the hash values need not have cryptographic significance, these can be simple one-to-one replacements.

In an example, the length of the modified values may be fixed (e.g., 6 to 12 characters, or any other suitable length) and may be configurable. The modified values contain no discernible reference to the original values, and there is no known reverse transformation to obtain the original values from the modified values. The original information is internally destroyed from the perspective of the GAI.

While replacing values within the source code, the software maintains a local reverse store that maps the transformed values to their original values. This can be used to reverse the output back into human readable text. This local reverse store may be stored in memory by default. It is also possible to store the transformation symbols table in local or remote nonvolatile memory, though this may require additional security measures for the data. This may be useful, for example, if information is to be shared among two or more programmers or other employees, in which case it may be necessary for them all to have access to the same reverse transformations. In cases where sharing the transformation symbols is not necessary, nonvolatile memory may be appropriate even without a backup because the same query can be regenerated and given to the AI from the original source code.

The transformation can be language specific or language agnostic.

In a language-specific example, a specific programming language's source code is analyzed to create an abstract syntax tree (AST) that captures the syntax elements of the source code. The method may then traverse the AST in a breadth first order and modify the following elements:
- names of variables and members, and their values;
- names of function definitions found in the code, while retaining external library names and system APIs;
- names of function arguments and their deeper default values, if specified;
- the names of variables and specific values contained in logical conditions and loops;
- names of scope definitions including classes, names, faces, and similar.

It is also possible to create a more general approach with a generic parser that relies on pattern definitions and/or regular expressions to define generic "syntax elements." These syntax elements can be detected across multiple languages. This may involve multiple expressions to detect the same syntax elements across multiple languages, which will allow replacement in various programming languages.

For projects with multiple files, the process may be run twice because locally defined functions are replaced while nonlocal functions are not replaced. Depending on the order of processing and parsing the files, some local function definitions may be missed. Thus, a second pass parsing may ensure that locally defined functions are correctly identified. In this case, the system may discriminate between files that are part of the developer's local source tree and files that are part of the framework or system. It may unnecessary and/or undesirable to replace symbols found in the framework or system files.

In one illustrative embodiment, instead of regular expressions or predefined logic, a neural network may be trained on several programming languages to identify syntax elements for the various programming languages. The training may also include providing examples of sanitized source code that transforms sensitive elements while maintaining enough logic, structure, and context for the GAI to provide useful analysis and feedback. Once this model is sufficiently refined, it may be able to identify syntax elements and other features even for languages that have not been expressly coded into the logic. Furthermore, the ML model may not only perform the initial transform, but may also be trained to reverse-transform results from the GAI, using a symbol store for transform mappings.

After the code has been transformed and associated with a query, the query and the transformed source code are provided to the GAI. The GAI provides a response based on the transformed source code. A reverse transform module may then reverse the transform using the retained mapping from the original values to the random or derived values. Thus, although the transform is nonreversible using internal information, it is reversible using the transformation symbols table. In an example, the software may use the results returned from the GAI and do a search-and-replace pass per the mappings created before. Furthermore, the software may search for other instances in the source code where the response from the GAI is relevant and either automatically update the code or make recommendations to the programmer based on the responses.

### Selected Examples

The foregoing can be used to build or embody several example implementations, according to the teachings of the present specification. Some example implementations are included here as nonlimiting illustrations of these teachings.

Example 1 includes method of providing protected access to a third-party generative artificial intelligence (GAI) for software development, comprising: transforming a source code input (a transformed source code) via a one-way transform, wherein an enterprise has a proprietary interest in the source code input, and wherein the one-way transform is not internally reversible; providing the transformed source code to the third-party GAI, in association with a query for the third-party GAI, wherein the third-party GAI is controlled by a party other than the enterprise; receiving from the third-party GAI a response to the query; and presenting the response to a human user via a human interface device (HID).

Example 2 includes the method of example 1, wherein the response includes a modified transformed source code, and further comprising using a transformation symbols store to reverse transform the modified transformed source code (a modified source code input) and presenting the reverse-transformed modified source code input to the human user via the HID.

Example 3 includes the method of example 2, wherein the transformation symbols store comprises mappings to reverse the one-way transform.

Example 4 includes the method of example 2, further comprising storing the transformations symbols store only in volatile memory.

Example 5 includes the method of example 2, further comprising storing the transformations symbols store on an enterprise-controlled volatile memory, wherein the enterprise-controlled volatile memory is controlled by an enterprise with a proprietary interest in the source code input.

Example 6 includes the method of example 1, wherein transforming the source code input comprises replacing function calls, variable names, scope names, and literals with values that do not have human-perceptible meaning.

Example 7 includes the method of example 1, wherein transforming the source code input comprises excluding system calls from transformation.

Example 8 includes the method of example 1, wherein transforming the source code input comprises excluding from transformation scope names, variables, parameters, default values, members, and function calls that belong to an external API or framework.

Example 9 includes the method of example 6, wherein replacing comprises using a hash value.

Example 10 includes the method of example 9, further comprising replacing numeric values in the hash value with alphabetic values.

Example 11 includes the method of example 6, wherein replacing comprises using a non-deterministic transform.

Example 12 includes the method of example 1, wherein transforming the source code input comprises retaining numerical values.

Example 13 includes the method of example 12, further comprising providing a strict mode to replace numerical values.

Example 14 includes the method of example 13, further comprising providing a user interface to mark individual lines or segments of code as strict.

Example 15 includes the method of example 1, further comprising providing the one-way transform as a background service for a local device.

Example 16 includes the method of example 1, wherein providing the one-way transform comprises using artificial intelligence within the one-way transform.

Example 17 includes the method of example 1, further comprising providing a text-to-speech engine to enable audio interaction with the third-party GAI.

Example 18 includes the method of example 1, further comprising providing an image processor to track eye or head movement and to provide contextual hints based on an area of a screen a user views.

Example 19 includes the method of example 1, further comprising providing a batch processing interface to process a set of source code input files.

Example 20 includes the method of example 1, wherein transforming the source code input comprises excluding common logical values from transformation.

Example 21 includes the method of any of examples 1 - 15, further comprising providing a lazy mode, wherein selected symbols are not transformed.

Example 22 includes the method of any of examples 1 - 15, further comprising providing the one-way transform as a backend service.

Example 23 includes the method of any of examples 1 - 15, further comprising providing the one-way transform as a plugin to an integrated development environment (IDE).

Example 24 includes the method of example 23, further comprising providing the one-way transform as a background service for the IDE, and providing real-time hints to improve or correct the source code input.

Example 25 includes the method of example 23, further comprising providing a query window within the IDE for a user to make explicit queries to the third-party GAI.

Example 26 includes the method of any of examples 1 - 15, wherein transforming the source code input comprises using a programming language-specific transform.

Example 27 includes the method of any of examples 1 - 15, wherein transforming the source code input comprises using a programming language-agnostic transform

Example 28 includes the method of any of examples 1 - 15, wherein the transformed source code is compilable but does not provide same outputs as the source code input.

Example 29 includes the method of any of examples 1 - 15, wherein the third-party GAI comprises a large language model (LLM).

Example 30 includes the apparatus comprising means for performing the method of any of examples 1 - 29.

Example 31 includes the apparatus of example 30, wherein the means for performing the method comprise a processor and a memory.

Example 32 includes the apparatus of example 31, wherein the memory comprises machine-readable instructions that, when executed, cause the apparatus to perform the method of any of examples 1 - 29.

Example 33 includes the apparatus of any of examples 30 - 32, wherein the apparatus is a computing system.

Example 34 includes the apparatus of example 33, wherein the apparatus is owned by the enterprise.

Example 35 includes the apparatus of example 33, wherein the apparatus is owned by a user with proprietary obligations to the enterprise.

Example 36 includes at least one computer readable medium comprising instructions that, when executed, implement a method or realize an apparatus as in any of examples 1 - 35.

Example 37 includes one or more tangible, nontransitory computer-readable storage media having stored thereon executable instructions to provide sanitized source code access to a generative artificial intelligence (GAI) for software development, the instructions, when executed to instruct a processor to: sanitize a source code input via a transform, wherein the transform is not internally reversible; send the sanitized source code input to the GAI with a query for the GAI; receive a response from the GAI with a transformed source code response; use a transformation symbols store to reverse transform the transformed source code response; and present the reverse transformed source code to a human user via a human interface device (HID).

Example 38 includes the one or more tangible, nontransitory computer-readable storage media of example 37, wherein the instructions are to store the transformations symbols store only in volatile memory.

Example 39 includes the one or more tangible, nontransitory computer-readable storage media of example 37, wherein the instructions are to store the transformations symbols store on an enterprise-controlled volatile memory, wherein the enterprise-controlled volatile memory is controlled by an enterprise with a proprietary interest in the source code input.

Example 40 includes the one or more tangible, nontransitory computer-readable storage media of example 37, wherein sanitizing the source code input comprises replacing function calls, variable names, scope names, and string literals with values that do not have human-perceptible meaning.

Example 41 includes the one or more tangible, nontransitory computer-readable storage media of example 37, wherein sanitizing the source code input comprises excluding system calls from transformation.

Example 42 includes the one or more tangible, nontransitory computer-readable storage media of example 37, wherein sanitizing the source code input comprises excluding from transformation scope names, variables, parameters, default values, members, and function calls that belong to an external API or framework.

Example 43 includes the one or more tangible, nontransitory computer-readable storage media of example 42, wherein replacing comprises using a hash value.

Example 44 includes the one or more tangible, nontransitory computer-readable storage media of example 43, wherein the instructions are further to replace numeric values within the hash value with alphabetic values.

Example 45 includes the one or more tangible, nontransitory computer-readable storage media of example 42, wherein replacing comprises using a non-deterministic transform.

Example 46 includes the one or more tangible, nontransitory computer-readable storage media of example 37, wherein sanitizing the source code input comprises retaining numerical values.

Example 47 includes the one or more tangible, nontransitory computer-readable storage media of example 46, wherein the instructions are further to provide a strict mode to replace numerical values.

Example 48 includes the one or more tangible, nontransitory computer-readable storage media of example 46, wherein the instructions are further to provide a user interface to mark individual lines or segments of code as strict.

Example 49 includes the one or more tangible, nontransitory computer-readable storage media of example 37, wherein providing transform comprises using artificial intelligence within transform.

Example 50 includes the one or more tangible, nontransitory computer-readable storage media of example 37, wherein the instructions are further to interact with a text-to-speech engine to enable audio interaction with the GAI.

Example 51 includes the one or more tangible, nontransitory computer-readable storage media of example 37, wherein the instructions are further to interface with an processor to track eye or head movement and to provide contextual hints based on an area of a screen a user views.

Example 52 includes the one or more tangible, nontransitory computer-readable storage media of example 37, wherein sanitizing the source code input comprises excluding common logical values from transformation.

Example 53 includes the one or more tangible, nontransitory computer-readable storage media of any of examples 37 - 52, wherein the instructions are further to provide a lazy mode, wherein selected symbols are not sanitized.

Example 54 includes the one or more tangible, nontransitory computer-readable storage media of any of examples 37 - 52, wherein the instructions are further to sanitize the source code input as a backend service.

Example 55 includes the one or more tangible, nontransitory computer-readable storage media of any of examples 37 - 52, wherein the instructions are to provide sanitizing the source code input as a plugin to an integrated development environment (IDE).

Example 56 includes the one or more tangible, nontransitory computer-readable storage media of example 55, wherein the instructions are to sanitize the source code input as a background service for the IDE, and provide real-time hints to improve or correct the source code input.

Example 57 includes the one or more tangible, nontransitory computer-readable storage media of example 55, wherein the instructions are further to provide a query window within the IDE for a user to make explicit queries to the GAI.

Example 58 includes the one or more tangible, nontransitory computer-readable storage media of any of examples 37 - 52, wherein sanitizing the source code input comprises using a programming language-specific transform.

Example 59 includes the one or more tangible, nontransitory computer-readable storage media of any of examples 37 - 52, wherein sanitizing the source code input comprises using a programming language-agnostic transform

Example 60 includes the one or more tangible, nontransitory computer-readable storage media of any of examples 37 - 52, wherein the sanitizing the source code input provides source code that is compilable but that does not provide same outputs as the source code input.

Example 61 includes the one or more tangible, nontransitory computer-readable storage media of any of examples 37 - 52, wherein the GAI comprises a large language model (LLM).

Example 62 includes a computing apparatus for sanitizing source code within an enterprise, comprising: a hardware platform comprising a processor circuit and a memory; and instructions encoded within the memory to instruct the processor circuit to: use a one-way transform to sanitize a source code input (a sanitized source input), wherein the one-way transform is not internally reversible; send the sanitized source code to a third-party GAI, with a query for the third-party GAI; receive a response from the third-party GAI, including a transformed source code response; use a transformation symbols store to reverse transform the transformed source code response; and present the reverse transformed source code to a human user via a human interface device (HID).

Example 63 includes the computing apparatus of example 62, further comprising instructions encoded within the memory to instruct the processor circuit to provide an integrated development environment (IDE).

Example 64 includes the computing apparatus of example 62, wherein the instructions are to store the transformations symbols store only in volatile memory.

Example 65 includes the computing apparatus of example 62, wherein the instructions are to store the transformations symbols store on an enterprise-controlled volatile memory, wherein the enterprise-controlled volatile memory is controlled by an enterprise with a proprietary interest in the source code input.

Example 66 includes the computing apparatus of example 62, wherein transforming the source code input comprises replacing function calls, variable names, scope names, and string literals with values that do not have human-perceptible meaning.

Example 67 includes the computing apparatus of example 62, wherein transforming the source code input comprises excluding system calls from transformation.

Example 68 includes the computing apparatus of example 62, wherein transforming the source code input comprises excluding from transformation scope names, variables, parameters, default values, members, and function calls that belong to an external API or framework.

Example 69 includes the computing apparatus of example 68, wherein replacing comprises using a hash value.

Example 70 includes the computing apparatus of example 69, wherein the instructions are further to replace numeric values in the hash value with alphabetic values.

Example 71 includes the computing apparatus of example 68, wherein replacing comprises using a non-deterministic transform.

Example 72 includes the computing apparatus of example 62, wherein transforming the source code input comprises retaining numerical values.

Example 73 includes the computing apparatus of example 72, further comprising providing a strict mode to replace numerical values.

Example 74 includes the computing apparatus of example 73, further comprising providing a user interface to mark individual lines or segments of code as strict.

Example 75 includes the computing apparatus of example 62, wherein providing the one-way transform comprises using artificial intelligence within the one-way transform.

Example 76 includes the computing apparatus of example 62, wherein the instructions are further to interact with a text-to-speech engine to enable audio interaction with the GAI.

Example 77 includes the computing apparatus of example 62, wherein the instructions are further to interface with an processor to track eye or head movement and to provide contextual hints based on an area of a screen a user views.

Example 78 includes the computing apparatus of example 62, wherein providing the one-way transform comprises using artificial intelligence within the one-way transform.

Example 79 includes the computing apparatus of example 62, wherein the instructions are further to interact with a text-to-speech engine to enable audio interaction with the GAI.

Example 80 includes the computing apparatus of example 62, wherein the instructions are further to interface with an processor to track eye or head movement and to provide contextual hints based on an area of a screen a user views.

Example 81 includes the computing apparatus of example 62, wherein transforming the source code input comprises excluding common logical values from transformation.

Example 82 includes the computing apparatus of any of examples 62 - 81, wherein the instructions are further to provide a lazy mode, wherein selected symbols are not transformed.

Example 83 includes the computing apparatus of any of examples 62 - 81, wherein the instructions are further to provide the one-way transform as a backend service.

Example 84 includes the computing apparatus of any of examples 62 - 81, wherein the instructions are further to provide the one-way transform as a plugin to an integrated development environment (IDE).

Example 85 includes the computing apparatus of example 84, further comprising providing the one-way transform as a background service for the IDE, and providing real-time hints to improve or correct the source code input.

Example 86 includes the computing apparatus of example 84, further comprising providing a query window within the IDE for a user to make explicit queries to the third-party GAI.

Example 87 includes the computing apparatus of any of examples 62 - 81, wherein transforming the source code input comprises using a programming language-specific transform.

Example 88 includes the computing apparatus of any of examples 62 - 81, wherein transforming the source code input comprises using a programming language-agnostic transform

Example 89 includes the computing apparatus of any of examples 62 - 81, wherein the transformed source code is compilable but does not provide same outputs as the source code input.

Example 90 includes the computing apparatus of any of examples 62 - 81, wherein the third-party GAI comprises a large language model (LLM).

Example 91 includes the computing apparatus of example 62, wherein the computing apparatus is owned by the enterprise.

Example 92 includes the computing apparatus of example 62, wherein the computing apparatus is owned by a user with proprietary obligations to the enterprise.

### Detailed Description of the Drawings

A system and method for source code transformation will now be described with more particular reference to the attached FIGURES. It should be noted that throughout the FIGURES, certain reference numerals may be repeated to indicate that a particular device or block is referenced multiple times across several FIGURES. In other cases, similar elements may be given new numbers in different FIGURES. Neither of these practices is intended to require a particular relationship between the various embodiments disclosed. In certain examples, a genus or class of elements may be referred to by a reference numeral ("widget 10"), while individual species or examples of the element may be referred to by a hyphenated numeral ("first specific widget 10-1" and "second specific widget 10-2").

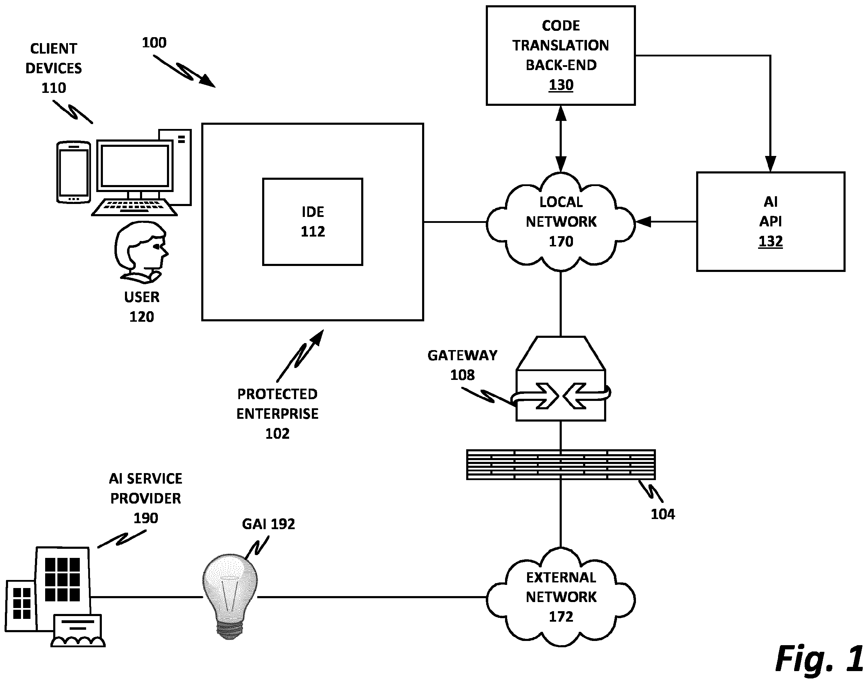

**FIGURE 1** is a block diagram of selected elements of a software development ecosystem 100. Software development ecosystem 100 includes a protected enterprise 102, which may be, for example, a business or other enterprise that wishes to protect proprietary or sensitive data from leakage during software development. An AI service provider 190 provides AI services such as an LLM-based GAI. User 120 may be a developer working for protected enterprise 102 who wishes to access the GAI provided by AI service provider 190. However, protected enterprise 102 may be concerned about data leakage and thus may wish to provide sanitized access to GAI 192.

User 120 operates client devices 110, such as a desktop computer, laptop computer, tablet, smartphone, or other devices to operate an IDE 112. IDE 112 provides a platform on which user 120 develops software for protected enterprise 102. Client devices 110 may be devices that protected enterprise 102 owns directly, or they may be owned by user 120. Many businesses have a "bring your own device" (BYOD) policy that permits employees to own and operate their own preferred devices for certain business functions. In that case, user 120 may have proprietary obligations and/or fiduciary duties to protected enterprise 102.

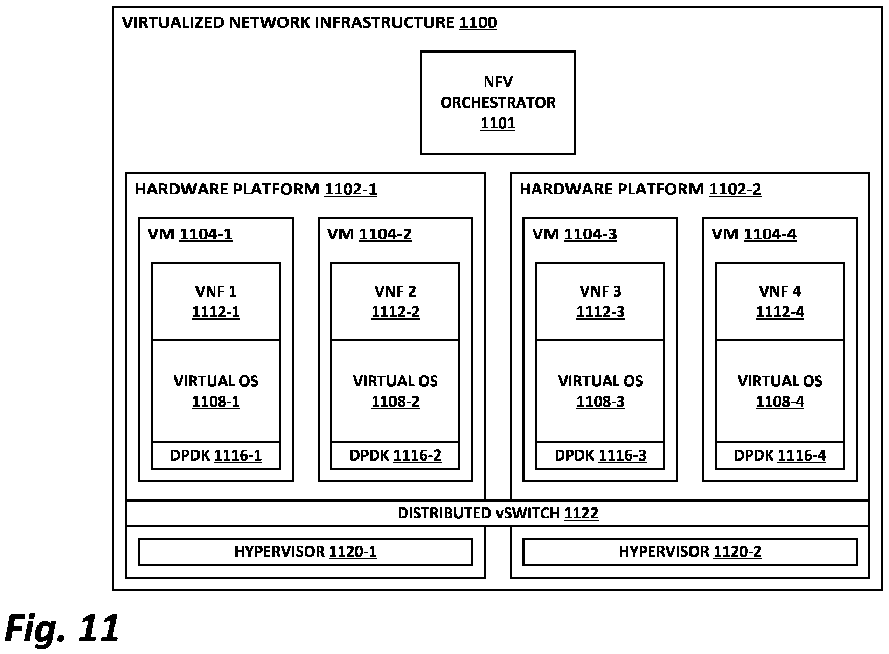

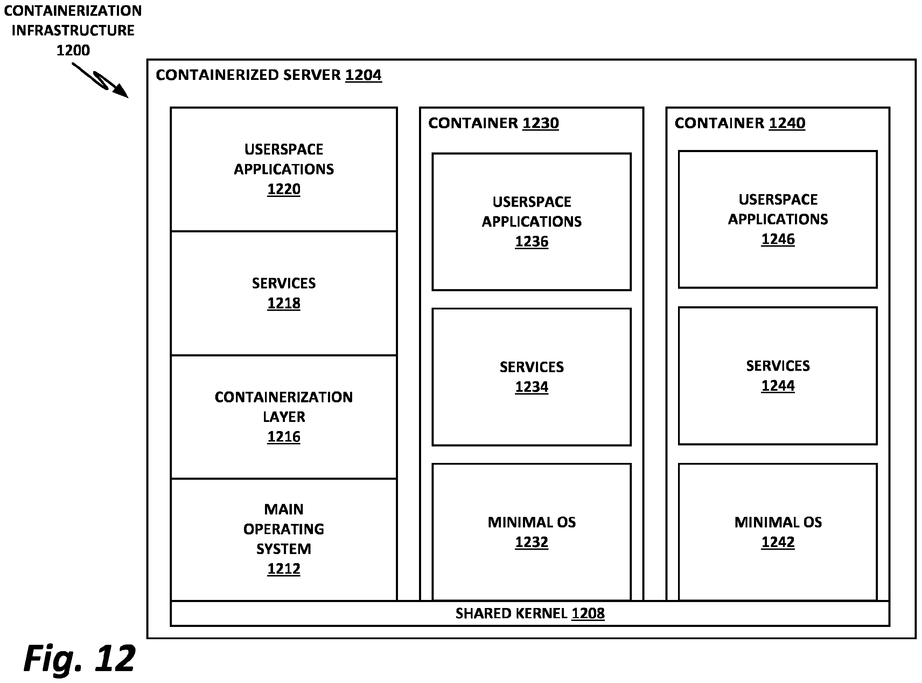

To ensure that user 120's interactions with GAI 192 are sanitized, protected enterprise 102 installs, for example, a code translation backend 130. Code translation backend 130 includes software that may run on client devices 110 or may run on a backend service provided by protected enterprise 102 or by a third-party service provider. In cases where code translation backend 130 is provided externally, this may offload computing demands from client devices 110, which may have relatively limited compute resources compared to a backend cloud, big iron, or data center infrastructure. Code translation backend 130 may also be provided on a dedicated machine or may be provisioned with hardware accelerators such as ASICs or FPGAs. This can help to reduce the impact or footprint of code translation backend 130 relative to client devices 110. In some embodiments, code translation backend 130 may be provided on a virtual machine as in FIGURE 11 or via containers as in FIGURE 12. An artificial intelligence API 132 may provide a translation layer between IDE 112 and code translation backend 130.

Within protected enterprise 102, devices communicate on a local network 170, which may include a LAN and which also, in some cases, may include device-local communications, such as via busses or other high-speed local communication networks. This illustrates that code translation backend 130 may be hosted in a variety of configurations, including cohosted with IDE 112 on a specific machine, hosted on a dedicated appliance, hosted on a backend or cloud service, or via other means. In some cases, code translation backend 130 may be provided by a third-party service provider, in which case protected enterprise 102 may own encryption or decryption keys that can ensure the security of the translation symbols tables that are used to reverse transform inputs to GAI 192.

Protected enterprise 102 communicates via a gateway 108 across an enterprise boundary 104 to external network 172, such as the internet. Commonly, an external network 172, such as the Internet, is used to communicate with GAI 192, particularly in cases where GAI 192 is hosted by a third-party or independent AI service provider 190 rather than hosted by protected enterprise 102. Furthermore, advantages may be realized by allowing user 120 to access services from a plurality of AI service providers 190 operating a plurality of GAIs 192 so that the user can cross reference results, crosscheck results, or select a best available GAI for a particular task.

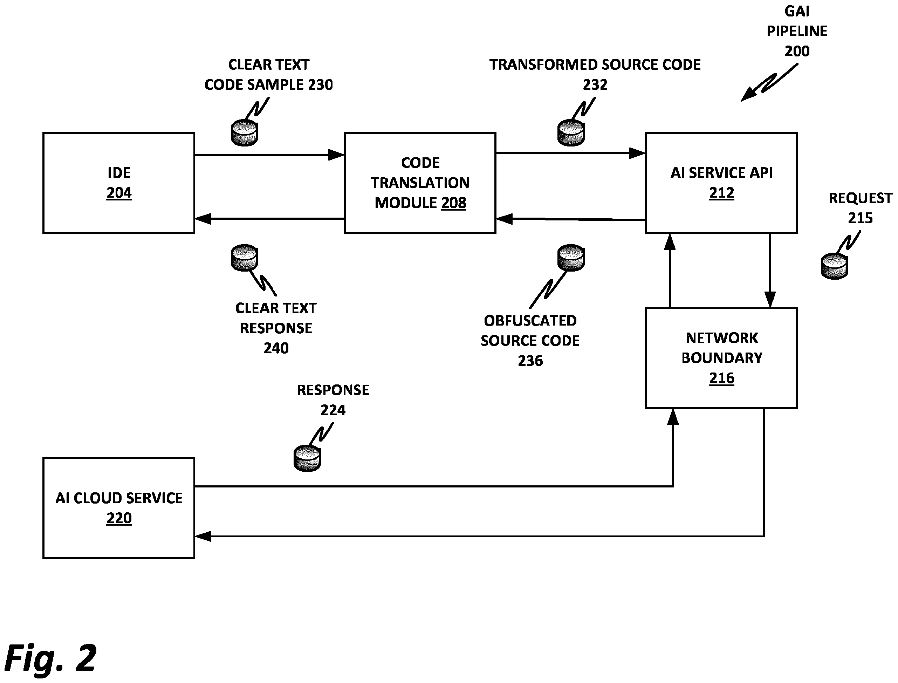

**FIGURE 2** is a block diagram of selected elements of a GAI pipeline 200.

Within GAI pipeline 200, a user operates IDE 204 to develop software for the enterprise. IDE 204 may autonomously perform queries to a GAI to provide hints or suggestions to the engineer, or the developer may explicitly ask questions to a GAI to solicit feedback or input.

IDE 204 sends a clear text code sample 230 to code translation module 208. Clear text code sample 230 includes the unmodified source code input that can be compiled and run as intended.

Code translation module 208 receives clear text code sample 230 and transforms the source code input into a transformed source code. Code translation module 208 sends transformed source code 232 to AI service API 212. AI service API 212 may optionally be an API provided by the GAI service to the enterprise to interact with the GAI. Alternatively, the enterprise could simply access the GAI via publicly available interfaces, such as an HTML interface or rest API. In those cases, the enterprise may elect to develop an internal API that handles translation between the GAI service and the enterprise.

AI service API 212 interacts across a network boundary 216 with AI cloud service 220. Because clear text code sample 230 is not transmitted across the network boundary 216, there is a reduced risk of transmission of IP or other sensitive information to AI cloud service 220.

AI service API 212 transmits request 215 across network boundary 216 to AI cloud service 220. Request 215 may be associated with or have attached thereto transformed source code 232.

AI cloud service 220 receives request 215 and may handle request 215 as a normal query. AI cloud service 220 may not know and need not know that request 215 includes transformed source code 232. Rather, AI cloud service 220 may simply recognize the payload as a source code input and may handle it accordingly.

AI cloud service 220 generates a response 224 and transmits response 224 across network boundary 216 to AI service API 212. AI service 212 receives response 224 and recognizes that response 224 includes or has attached thereto obfuscated source code 236. Obfuscated source code 236 may include a modified source code as understood by AI cloud service 220. For obfuscated source code 236 to be useful to a programmer, engineer, or developer, it needs to be translated back into a human readable form. Thus, code translation module 208 receives obfuscated source code 236 from AI service API 212 and uses a transformation symbols table to look up the human-readable values associated with the transformed values visible in obfuscated source code 236. Code translation module 208 then provides a clear text response 240 to IDE 204 which can then display the output to a human user via an HID.

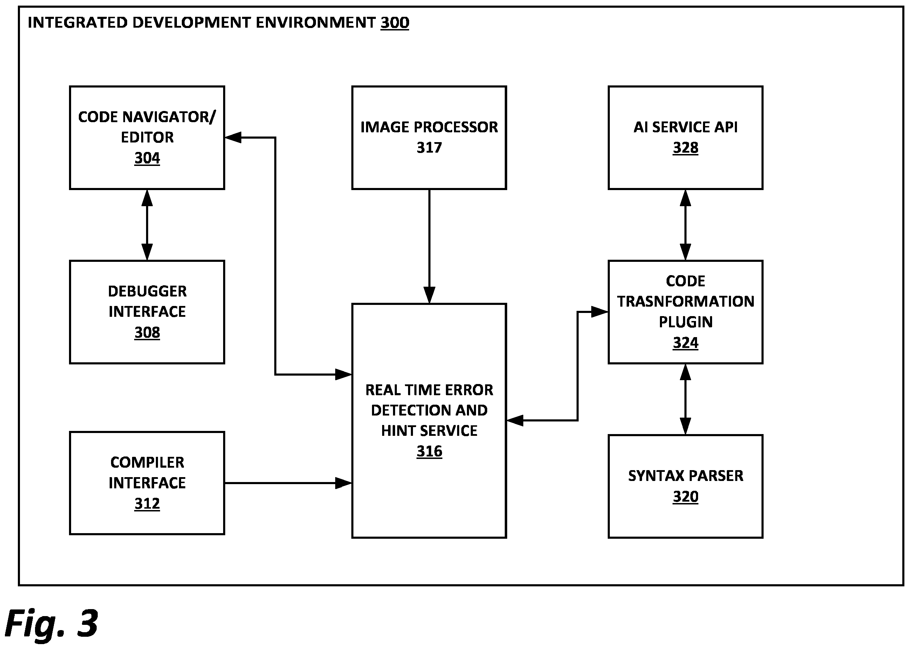

**FIGURE 3** is a block diagram of selected elements of an integrated development environment 300. IDE 300 includes a traditional code navigator or editor 304, which the developer uses to enter source code, perform searches and replaces, navigate from one part of the code to another, and otherwise perform development tasks. IDE 300 may also include a debugger interface 308, which interfaces with a debugger to allow the user to step through code, view errors, inspect values, and perform other debugger tasks.

A compiler interface 312 may also interface with a compiler, which compiles the code, produces error and warnings, and otherwise provides feedback or services to IDE 300. Using code navigator 304, debugger interface 308, and compiler interface 312, the developer can perform many powerful tasks from a single dashboard or interface.

However, the developer may also wish to engage the services of a GAI. Furthermore, the IDE may wish to provide hints to the developer as the developer writes code. In this example, IDE 300 includes a real-time error detection and hints service 316. This may include a number of services, including, for example, an input window where the user can input explicit queries or a background service that continuously evaluates the code and provides hints to the developer. Real-time error detection and hints service 316 may be a standalone app or tool, a backend service provided in the cloud or on a local network, or a plug-in to IDE 300. Real-time error detection and hints service 316 may interface with a code transformation plug-in 324. Code transformation plug-in 324 receives source code inputs from the user or scrapes the code base for source code, inputs, and performs code transformations on the source code. Operating an AI service API 328, code transformation plug-in 324 may interact with a GAI or other AI service or any other third-party service where leaking source code is of concern. Code transformation plug-in 324 may receive responses from AI service API 328 and perform reverse transformation on the responses so that human-readable code is provided to IDE 300.

In one example, hints service 316 may interface with an image processor 317, which may include for example a web camera or infrared head tracker. This may enable hints service 316 to track which portion of the screen the user is looking at, and then determine which window is visible in that portion of the screen. Hints service 316 may then contextually provide an input window that provides GAI services relevant for that portion of the screen.

Code transformation plug-in 324 may include or may interface with a syntax parser 320. Syntax parser 320 may include syntax rules, regular expressions, a neural network, or other machine-learning infrastructure that allows code transformation plug-in 324 to recognize the structure and syntax of the source code so that appropriate replacements can be made. Syntax parser 320 may also include the names of system API calls or other common function calls that are not part of the internal code base. Leaving such external function calls unmodified may provide important context and clues for the GAI to provide better quality responses. For example, if the code base includes lines of code that write content out to standard out or standard error or that provides pop-up boxes or HTML output, it may be useful and beneficial for the GAI to be able to understand that is what the code is doing. If these common function calls are obfuscated, it may be difficult for the GAI to provide useful results. However, the content of the output may be masked. These may include string literals or variable names. Thus, the GAI may know that the program is writing something out for user display or to a log, but the content of the output is hidden. This gives the GAI an opportunity to understand the program flow and to identify potential errors while masking sensitive information that may be included in the variable names, in string literals, or in internal function calls.

In some cases, syntax parser 320 may include a plurality of language-specific syntaxes which are used to translate for various common and well-known programming languages such as C, C++, Java, JavaScript, PHP, Node.js, Ruby, REST, Perl, Python, or others. In other embodiments, or in addition to this, syntax parser 320 may include a generic or universal syntax parser, which may use regular expressions, human-coded logic, or machine learning, such as a neural network, to identify and recognize the structure and syntax of various forms of source code. Thus, if the developer is operating IDE 300 to develop software in a language that has not been specifically encoded within syntax parser 320, syntax parser 320 may still have the ability to transform the source code.

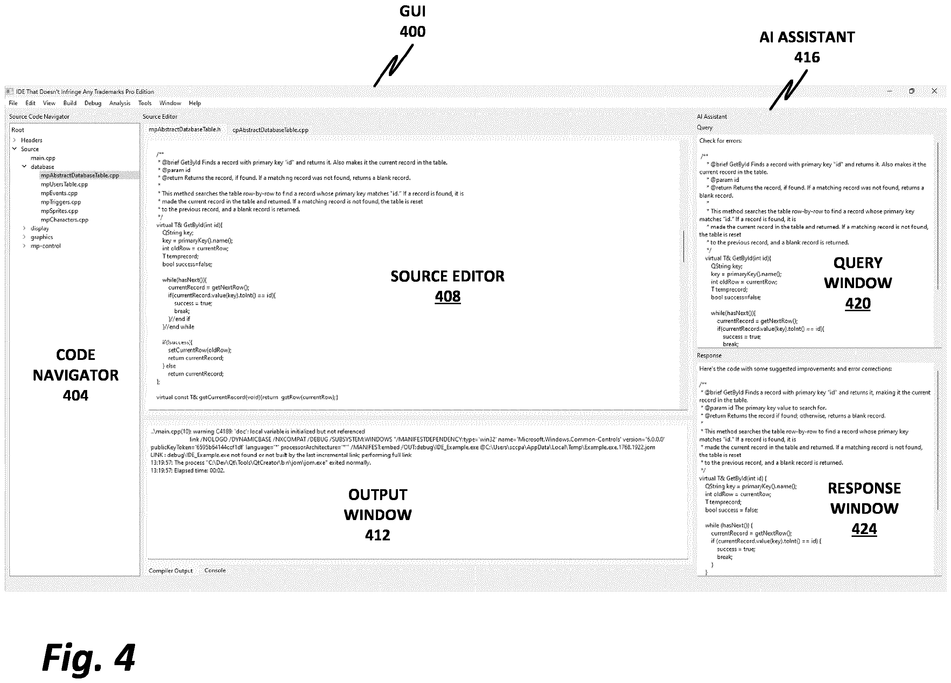

**FIGURE 4** is a block diagram illustration of selected elements of a graphical user interface 400. GUI 400 may provide common elements of an IDE such as a code navigator 404, a source editor 408, and an output window 412. In this example, GUI 400 also includes an AI assistant 416, which provides a native built-in interface for the developer to interact with a GAI. In this example, there is a query window 420 in which the developer pastes in a question for the GAI. In this case, the user has pasted in some source code and would like the GAI to perform error detection and correction. In a response window 424, the GAI has evaluated the code and provided some suggestions to update and improve the code. In this example, both query window 420 and response window 424 display human-readable data. However, the IDE that provides GUI 400 may include a backend service that performs code translation. Thus, before the text from query window 420 is sent to the GAI, the code is transformed. In this case, it is evident that the developer is coding in the QT programming language, which is a framework for C++ development. The user has input the query check for errors and then included the source code. There are a number of comments that identify parameters and that explain what the function does. Although the comments are not read by the compiler, they can provide useful context and information for the GAI. However, they can also be a source of data leakage. Thus, special formatting is used in the comments section to identify variable names. This special formatting can be used by an automatic documentation engine to generate documentation for the function. In this case, the variable names will be replaced as they will in the actual code. In some cases, the comments may be removed to avoid data leakage. This is because it may be more difficult or less reliable to identify variable names and other potential sources of leakage in the comments. The code that the programmer wants to check includes a number of variables and function calls. In this case, system APIs are not replaced in the code transformation. For example, the programmer is using a QString type variable to store a key that appears to be a primary key into a database. There is no data leakage from the GAI knowing the variable type, and the name QString is not a proprietary secret to the enterprise that needs to be protected from leakage. Thus, the type QString is maintained while the variable name key is transformed into a nonhuman-readable form. The same will be done for other variable names throughout query window 420. However, common logical values such as true and false may be maintained to help the GAI recognize and understand the structure. After the code has been transformed, it is provided to the GAI which analyzes the code and provides a response. The GAI's response will include the transformed variable and string literal names, which are not meaningful to the human programmer. Thus, the code transformation service will reverse the transform before outputting the text to response window 424.

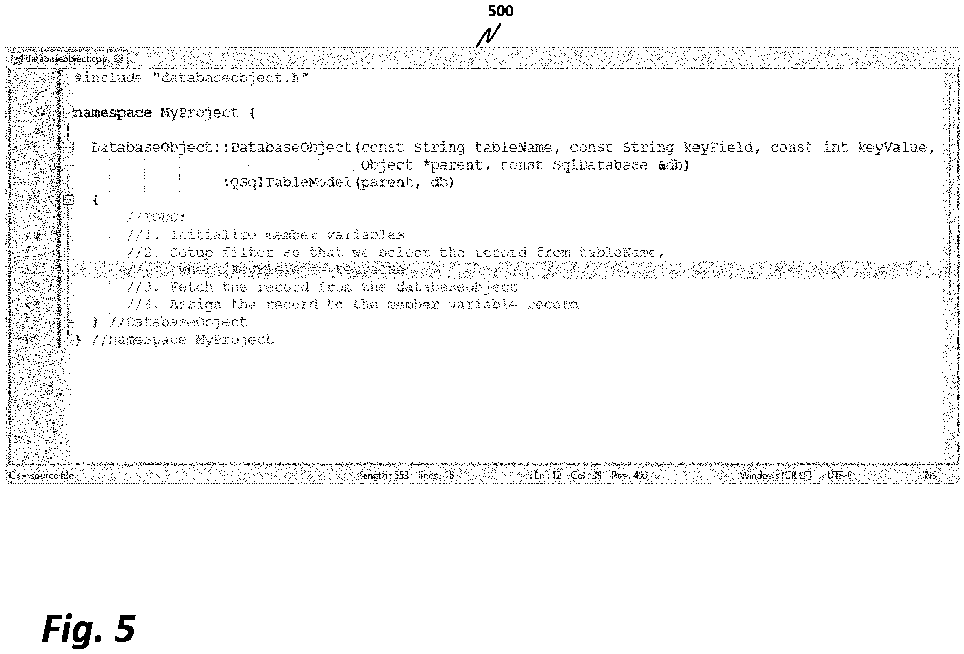

**FIGURE 5** is a block diagram of selected elements of a code input window 500. Code input window may be an embodiment, for example, of source editor 408 of FIGURE 4. In this case, the developer is defining a new class called database object. The class exists within the namespace My Project. The IDE may commonly provide the skeleton definition for the new class when the user defines the class, such as in a header file. In this case, the user then provides several tasks that he or she wants to perform in the class constructor. These include initializing member variables, setting up filters, fetching the record from the database, and assigning the record to a member variable-named record. The user may provide this text explicitly to a GAI with a request to fill in code for the requested tasks, or the IDE may recognize that this is code that the user wants to fill in and, working in the background, may automatically query the GAI. As part of the transformation, the namespace My Project may be transformed, the name database object may be transformed, and the variable and member names may be transformed.

In this case, the code transformation module may recognize that Q-SQL table model is a built-in class for the QT architecture, and so there is no need to transform the name Q-SQL table model. Furthermore, the parameters parent and DB are known parameters for the class Q-SQL table model, and so those need not be transformed either, including that they do not need to be transformed as parameters to the new class database object. In this case, the user provides the query either explicitly to the GAI, or the IDE implicitly sends the request.

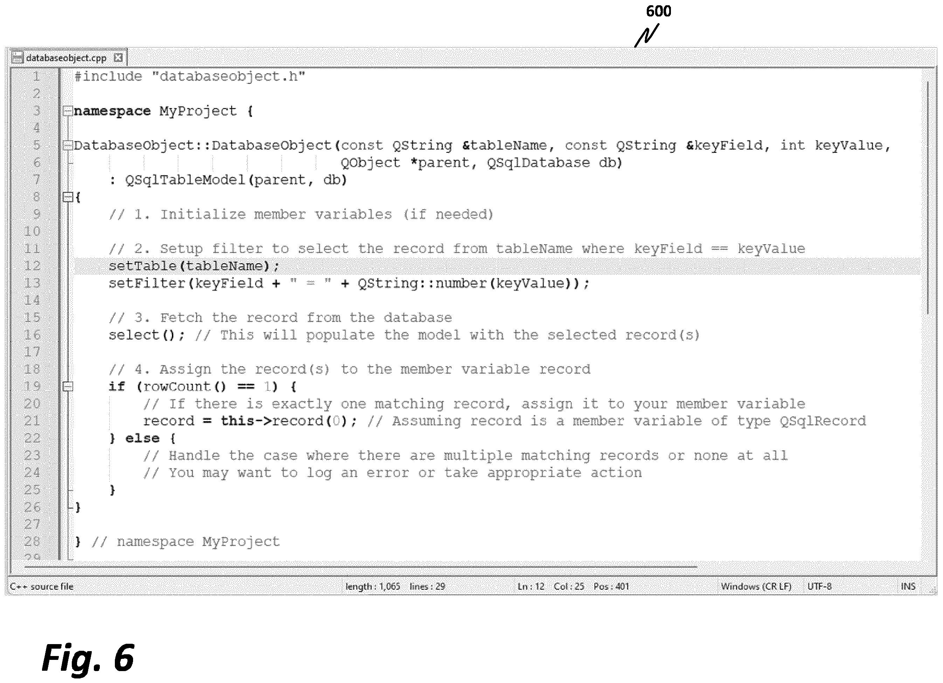

**FIGURE 6** shows example output 600 from the GAI model. In this example, the programmer pasted the code snippet from FIGURE 5 into a query window for the GAI (or alternatively, a code scraper scraped the TODO list from existing source code and auto-generated a query). The GAI responds: "It seems you have a C++ class named DatabaseObject within a namespace MyProject that derives from QSqlTableModel. This class appears to be intended for database operations. You've outlined some TODOs in the constructor. Here's how you can complete these steps."

The GAI then provides the suggested output. Note that the function names set table, set filter, and select are provided by the parent class QSqlTableModel. Thus, these are not transformed, and if a later query is performed on this new code, there is no need to transform them. Similarly, the member this->record is included with the class QSqlTableModel, so there is no need to transform this->record, this->filter, or other symbols included in the parent class. However, the class members tableName, keyField, and keyvalue are specific to the newly-defined class and therefore are transformed before being sent to the GAI.

Notably, the GAI may glean useful context from the member names listed above. In case the user wishes to provide that context to the GAI, the user may enter additional text to tell the GAI what the variables represent. For example:

```
 112. Setup a filter so that the record with a primary index named
 "keyField" is fetched where the value is "keyValue."
```

This may be transformed, such as:

```
 112. Setup a filter so that the record with a primary index named
 "afgmcdocdorlkdfm" is fetched where the value is "dpmihdaleknifd."
```

These variable names are meaningless to the GAI and to anybody reviewing the code later, and thus are not useful as context hints. But the descriptive text provides enough context for the GAI to work with. While this may superficially seem to defeat the purpose of obfuscating variable names, this method will interfere with a bot that scrapes variable names from code samples. Because the code sample will be one of millions that are used in training, it is unlikely that a human user will specifically look at the prompts contained in the comment. Furthermore, this forces the programmer to selectively and purposefully identify what will be disclosed to the GAI, thus reducing the risk of accidental leakage.

Alternatively, the IDE may have a context menu, wherein the programmer can select a single variable name and mark that variable, member, string literal, or other element and mark it "Do Not Transform." This similarly allows certain context hints to be retained when they are useful to the GAI. To prevent lazy programmers from marking entire blocks of text as "Do Not Transform," the IDE may enforce limits, such as allowing the allowing the programmer to select only a single variable/member or single line at a time. In contrast to the "strict" mode, wherein even numerical constants are transformed, this may be considered a "lazy" mode, wherein the selected elements are not transformed.

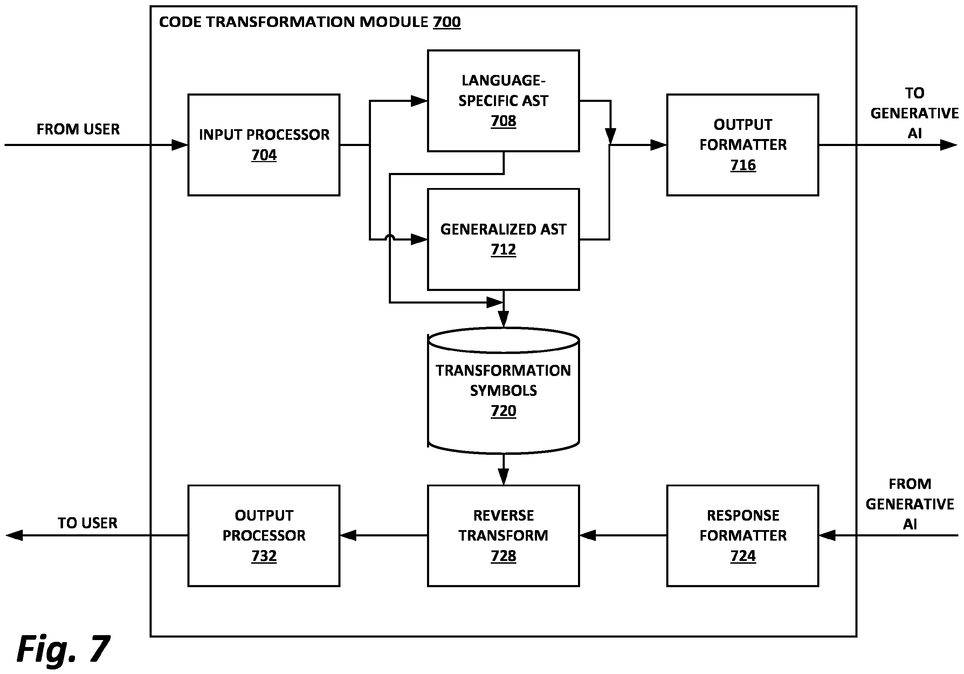

**FIGURE 7** is a block diagram of selected elements of a code transformation module 700. Code transformation module 700 includes the necessary logic to perform the transform and inverse transform on source code inputs to protect from leakage of proprietary or other sensitive data while interacting with a generative AI. Code transformation module 700 carries out methods as illustrated throughout this specification and may be embodied in any suitable form. For example, code transformation 700 may include instructions encoded within a transitory or non-transitory computer-readable medium which, when carried out, perform the methods disclosed herein. Code transformation module 700 may also be embodied in hardware such as an accelerator, an FPGA, and ASIC, or other suitable hardware. Furthermore, various functions of code transformation module 700 may be provided on different hardware platforms. For example, some of the blocks illustrated herein may be provided as microservices that run on a container or within virtual machines or in any mixture thereof. Furthermore, the logical blocks illustrated here provide a logical division of certain functions. However, this is not to imply that the blocks here must necessarily be separate software and/or hardware modules. In various embodiments, the functions of a particular block may be divided among a plurality of hardware and/or software modules or, alternatively, multiple blocks may be combined together into one hardware or software module. Furthermore, certain subfunctions of a block may be combined with subfunctions of another block, as appropriate.

Code transformation module 700 includes an input processor 704. Input processor 704 receives the source code input from an appropriate source. For example, input processor 704 may receive an explicit query from the user, or input processor 704 may run in the background and scrape source code from the IDE and provide real-time unprompted updates.

Input processor 704 provides the source code input to a language-specific AST 708 or, alternatively, to a generalized AST 712.

Language-specific AST 708 may include specific transforms for a given programming language. One advantage of a language-specific AST 708 is higher accuracy and better control over the code transformation process.

Alternatively, generalized AST 712 may provide greater flexibility as there is no need to hardcode language transforms for each individual programming language. Rather, generalized AST 712 may use regular expressions, machine learning, or other methods to transform a plurality of cloak programming languages. In some cases, this increased flexibility may come at the cost of lesser accuracy. Thus, in some embodiments, language-specific AST 708 may be combined with generalized AST 712. Language-specific AST 708 may be used in cases where a language-specific transform is known and available, and generalized AST 712 may be used in instances where a language-specific AST is not known or provided.

Whether language-specific AST 708 or generalized AST 712, the AST stores transformation symbols in a transformation symbols data store 720. This is because the transformation is not internally reversible. Rather, the transformation symbols may include a table of replacements so that the transformation can be reversed.

After destroying the transformation symbols, the AST provides the transformed source code to an output formatter 716. Output formatter 716 may include any necessary logic to translate, modify, condition, or otherwise prepare the input for the generative AI. Output formatter 716 may also include an API to connect to the GAI.

After the GAI has performed its work, it returns a response. Code transformation module 700 receives a response from the GAI at response formatter 724. Response formatter 724 may include a logic to condition, prepare, modify, or otherwise change the response text for use in the system. Response formatter 724 may also include an API that connects to the GAI and receives responses therefrom.

Response formatter 724 provides the response to reverse transform 728. Reverse transform 728 is a module that reverses the transformation. Reverse transform 728 may receive the transformation symbols from transformation symbols store 720. Reverse transform 728 is then able to restore the source code to a human-readable form. Note that the source code provided back may not be identical to the source code input provided to the GAI and, in many cases, will be different. One of the benefits of the GAI is to provide queries and receive improvements, modifications, or hints for the source code. Thus, the transform source code that the GAI returns may be different from the transform source code that it receives. Reverse transform 728 thus returns the modified transform source code to a human-readable format.

Output processor 732 receives the reverse transformed modified source code and prepares a response for presentation to the end user. For example, the output processor 732 may send the output to a window where the user can see the output. It may also perform other useful functions such as providing syntax formatting, colorization, highlighting, or other useful markups that are useful to the end user.

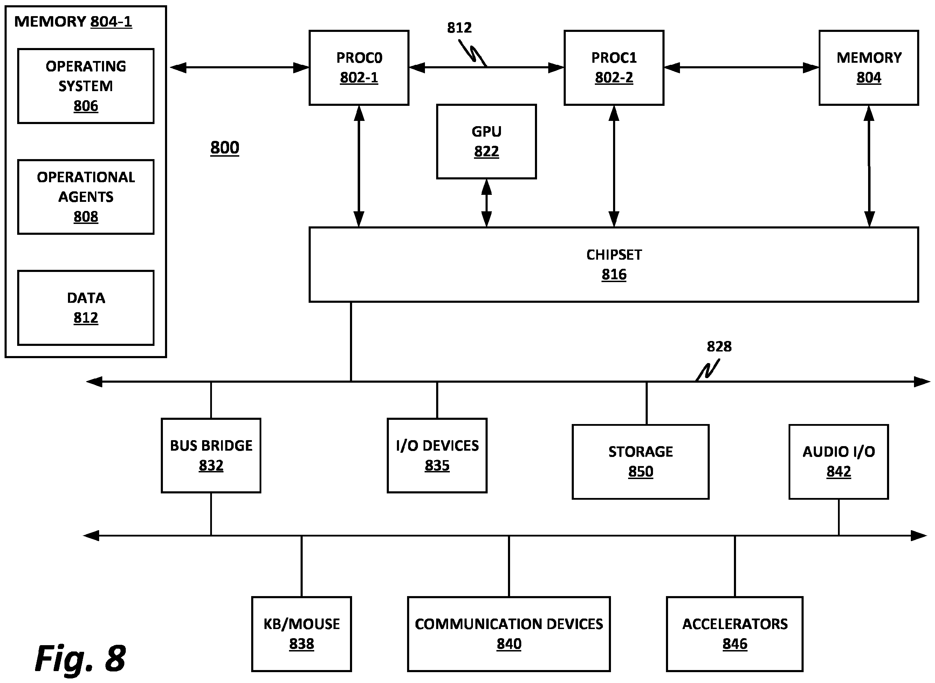

**FIGURE 8** is a block diagram of a hardware platform 800. Hardware platform 800 may be owned by an enterprise that uses a source code transformation system, or may be owned by a user with proprietary obligations to the enterprise. Hardware platform 800 may be a suitable platform to host, for example, an IDE for software development, and may also provide the code transformation module, or an API into an external code transformation module.

Although a particular configuration is illustrated here, there are many different configurations of hardware platforms, and this embodiment is intended to represent the class of hardware platforms that can provide a computing device. Furthermore, the designation of this embodiment as a "hardware platform" is not intended to require that all embodiments provide all elements in hardware. Some of the elements disclosed herein may be provided, in various embodiments, as hardware, software, firmware, microcode, microcode instructions, hardware instructions, hardware or software accelerators, or similar. Furthermore, in some embodiments, entire computing devices or platforms may be virtualized, on a single device, or in a data center where virtualization may span one or a plurality of devices. For example, in a "rackscale architecture" design, disaggregated computing resources may be virtualized into a single instance of a virtual device. In that case, all of the disaggregated resources that are used to build the virtual device may be considered part of hardware platform 800, even though they may be scattered across a data center, or even located in different data centers.

Hardware platform 800 is configured to provide a computing device. In various embodiments, a "computing device" may be or comprise, by way of nonlimiting example, a computer, workstation, server, mainframe, virtual machine (whether emulated or on a "bare metal" hypervisor), network appliance, container, IoT device, high performance computing (HPC) environment, a data center, a communications service provider infrastructure (e.g., one or more portions of an Evolved Packet Core), an in-memory computing environment, a computing system of a vehicle (e.g., an automobile or airplane), an industrial control system, embedded computer, embedded controller, embedded sensor, personal digital assistant, laptop computer, cellular telephone, internet protocol (IP) telephone, smart phone, tablet computer, convertible tablet computer, computing appliance, receiver, wearable computer, handheld calculator, or any other electronic, microelectronic, or microelectromechanical device for processing and communicating data. At least some of the methods and systems disclosed in this specification may be embodied by or carried out on a computing device.

In the illustrated example, hardware platform 800 is arranged in a point-to-point (PtP) configuration. This PtP configuration is popular for personal computer (PC) and server-type devices, although it is not so limited, and any other bus type may be used.

Hardware platform 800 is an example of a platform that may be used to implement embodiments of the teachings of this specification. For example, instructions could be stored in storage 850. Instructions could also be transmitted to the hardware platform in an ethereal form, such as via a network interface, or retrieved from another source via any suitable interconnect. Once received (from any source), the instructions may be loaded into memory 804, and may then be executed by one or more processor 802 to provide elements such as an operating system 806, operational agents 808, or data 812.

Hardware platform 800 may include several processors 802. For simplicity and clarity, only processors PROC0 802-1 and PROC1 802-2 are shown. Additional processors (such as 2, 4, 8, 16, 24, 32, 64, or 128 processors) may be provided as necessary, while in other embodiments, only one processor may be provided. Processors may have any number of cores, such as 1, 2, 4, 8, 16, 24, 32, 64, or 128 cores.

Processors 802 may be any type of processor and may communicatively couple to chipset 816 via, for example, PtP interfaces. Chipset 816 may also exchange data with other elements, such as a high performance graphics adapter 822. In alternative embodiments, any or all of the PtP links illustrated in FIGURE 8 could be implemented as any type of bus, or other configuration rather than a PtP link. In various embodiments, chipset 816 may reside on the same die or package as a processor 802 or on one or more different dies or packages. Each chipset may support any suitable number of processors 802. A chipset 816 (which may be a chipset, uncore, Northbridge, Southbridge, or other suitable logic and circuitry) may also include one or more controllers to couple other components to one or more central processor units (CPU).

Two memories, 804-1 and 804-2 are shown, connected to PROC0 802-1 and PROC1 802-2, respectively. As an example, each processor is shown connected to its memory in a direct memory access (DMA) configuration, though other memory architectures are possible, including ones in which memory 804 communicates with a processor 802 via a bus. For example, some memories may be connected via a system bus, or in a data center, memory may be accessible in a remote DMA (RDMA) configuration.

Memory 804 may include any form of volatile or nonvolatile memory including, without limitation, magnetic media (e.g., one or more tape drives), optical media, flash, random access memory (RAM), double data rate RAM (DDR RAM) nonvolatile RAM (NVRAM), static RAM (SRAM), dynamic RAM (DRAM), persistent RAM (PRAM), data-centric (DC) persistent memory (e.g., Intel Optane/3D-crosspoint), cache, Layer 1 (L1) or Layer 2 (L2) memory, on-chip memory, registers, virtual memory region, read-only memory (ROM), flash memory, removable media, tape drive, cloud storage, or any other suitable local or remote memory component or components. Memory 804 may be used for short, medium, and/or long-term storage. Memory 804 may store any suitable data or information utilized by platform logic. In some embodiments, memory 804 may also comprise storage for instructions that may be executed by the cores of processors 802 or other processing elements (e.g., logic resident on chipsets 816) to provide functionality.

In certain embodiments, memory 804 may comprise a relatively low-latency volatile main memory, while storage 850 may comprise a relatively higher-latency nonvolatile memory. However, memory 804 and storage 850 need not be physically separate devices, and in some examples may represent simply a logical separation of function (if there is any separation at all). It should also be noted that although DMA is disclosed by way of nonlimiting example, DMA is not the only protocol consistent with this specification, and that other memory architectures are available.

Certain computing devices provide main memory 804 and storage 850, for example, in a single physical memory device, and in other cases, memory 804 and/or storage 850 are functionally distributed across many physical devices. In the case of virtual machines or hypervisors, all or part of a function may be provided in the form of software or firmware running over a virtualization layer to provide the logical function, and resources such as memory, storage, and accelerators may be disaggregated (i.e., located in different physical locations across a data center). In other examples, a device such as a network interface may provide only the minimum hardware interfaces necessary to perform its logical operation, and may rely on a software driver to provide additional necessary logic. Thus, each logical block disclosed herein is broadly intended to include one or more logic elements configured and operable for providing the disclosed logical operation of that block. As used throughout this specification, "logic elements" may include hardware, external hardware (digital, analog, or mixed-signal), software, reciprocating software, services, drivers, interfaces, components, modules, algorithms, sensors, components, firmware, hardware instructions, microcode, programmable logic, or objects that can coordinate to achieve a logical operation.

Graphics adapter 822 may be configured to provide a human-readable visual output, such as a command-line interface (CLI) or graphical desktop such as Microsoft Windows, Apple OSX desktop, or a Unix/Linux X Window System-based desktop. Graphics adapter 822 may provide output in any suitable format, such as a coaxial output, composite video, component video, video graphics array (VGA), or digital outputs such as digital visual interface (DVI), FPDLink, DisplayPort, or high definition multimedia interface (HDMI), by way of nonlimiting example. In some examples, graphics adapter 822 may include a hardware graphics card, which may have its own memory and its own graphics processing unit (GPU).

Chipset 816 may be in communication with a bus 828 via an interface circuit. Bus 828 may have one or more devices that communicate over it, such as a bus bridge 832, I/O devices 835, accelerators 846, communication devices 840, and a keyboard and/or mouse 838, by way of nonlimiting example. In general terms, the elements of hardware platform 800 may be coupled together in any suitable manner. For example, a bus may couple any of the components together. A bus may include any known interconnect, such as a multi-drop bus, a mesh interconnect, a fabric, a ring interconnect, a round-robin protocol, a PtP interconnect, a serial interconnect, a parallel bus, a coherent (e.g., cache coherent) bus, a layered protocol architecture, a differential bus, or a Gunning transceiver logic (GTL) bus, by way of illustrative and nonlimiting example.

Communication devices 840 can broadly include any communication not covered by a network interface and the various I/O devices described herein. This may include, for example, various universal serial bus (USB), FireWire, Lightning, or other serial or parallel devices that provide communications.

I/O Devices 835 may be configured to interface with any auxiliary device that connects to hardware platform 800 but that is not necessarily a part of the core architecture of hardware platform 800. A peripheral may be operable to provide extended functionality to hardware platform 800, and may or may not be wholly dependent on hardware platform 800. In some cases, a peripheral may be a computing device in its own right. Peripherals may include input and output devices such as displays, terminals, printers, keyboards, mice, modems, data ports (e.g., serial, parallel, USB, Firewire, or similar), network controllers, optical media, external storage, sensors, transducers, actuators, controllers, data acquisition buses, cameras, microphones, speakers, or external storage, by way of nonlimiting example.

In one example, audio I/O 842 may provide an interface for audible sounds, and may include in some examples a hardware sound card. Sound output may be provided in analog (such as a 3.5mm stereo jack), component ("RCA") stereo, or in a digital audio format such as S/PDIF, AES3, AES47, HDMI, USB, Bluetooth, or Wi-Fi audio, by way of nonlimiting example. Audio input may also be provided via similar interfaces, in an analog or digital form. In selected embodiments, audio I/O 842 may include a speech-to-text engine to provide audio interaction with a GAI.

Bus bridge 832 may be in communication with other devices such as a keyboard/mouse 838 (or other input devices such as a touch screen, trackball, etc.), communication devices 840 (such as modems, network interface devices, peripheral interfaces such as PCI or PCIe, or other types of communication devices that may communicate through a network), audio I/O 842, a data storage device 844, and/or accelerators 846. In alternative embodiments, any portions of the bus architectures could be implemented with one or more PtP links.

Operating system 806 may be, for example, Microsoft Windows, Linux, UNIX, Mac OS X, iOS, MS-DOS, or an embedded or real-time operating system (including embedded or real-time flavors of the foregoing). In some embodiments, a hardware platform 800 may function as a host platform for one or more guest systems that invoke application (e.g., operational agents 808).

Operational agents 808 may include one or more computing engines that may include one or more nontransitory computer-readable mediums having stored thereon executable instructions operable to instruct a processor to provide operational functions. At an appropriate time, such as upon booting hardware platform 800 or upon a command from operating system 806 or a user or security administrator, a processor 802 may retrieve a copy of the operational agent (or software portions thereof) from storage 850 and load it into memory 804. Processor 802 may then iteratively execute the instructions of operational agents 808 to provide the desired methods or functions.

As used throughout this specification, an "engine" includes any combination of one or more logic elements, of similar or dissimilar species, operable for and configured to perform one or more methods provided by the engine. In some cases, the engine may be or include a special integrated circuit designed to carry out a method or a part thereof, a field-programmable gate array (FPGA) programmed to provide a function, a special hardware or microcode instruction, other programmable logic, and/or software instructions operable to instruct a processor to perform the method. In some cases, the engine may run as a "daemon" process, background process, terminate-and-stay-resident program, a service, system extension, control panel, bootup procedure, basic in/output system (BIOS) subroutine, or any similar program that operates with or without direct user interaction. In certain embodiments, some engines may run with elevated privileges in a "driver space" associated with ring 0, 1, or 2 in a protection ring architecture. The engine may also include other hardware, software, and/or data, including configuration files, registry entries, application programming interfaces (APIs), and interactive or user-mode software by way of nonlimiting example.

In some cases, the function of an engine is described in terms of a "circuit" or "circuitry to" perform a particular function. The terms "circuit" and "circuitry" should be understood to include both the physical circuit, and in the case of a programmable circuit, any instructions or data used to program or configure the circuit.

Where elements of an engine are embodied in software, computer program instructions may be implemented in programming languages, such as an object code, an assembly language, or a high-level language such as OpenCL, FORTRAN, C, C++, JAVA, or HTML. These may be used with any compatible operating systems or operating environments. Hardware elements may be designed manually, or with a hardware description language such as Spice, Verilog, and VHDL. The source code may define and use various data structures and communication messages. The source code may be in a computer executable form (e.g., via an interpreter), or the source code may be converted (e.g., via a translator, assembler, or compiler) into a computer executable form, or converted to an intermediate form such as byte code. Where appropriate, any of the foregoing may be used to build or describe appropriate discrete or integrated circuits, whether sequential, combinatorial, state machines, or otherwise.

A network interface may be provided to communicatively couple hardware platform 800 to a wired or wireless network or fabric. A "network," as used throughout this specification, may include any communicative platform operable to exchange data or information within or between computing devices, including, by way of nonlimiting example, a local network, a switching fabric, an ad-hoc local network, Ethernet (e.g., as defined by the IEEE 802.3 standard), Fiber Channel, InfiniBand, Wi-Fi, or other suitable standard. Intel Omni-Path Architecture (OPA), TrueScale, Ultra Path Interconnect (UPI) (formerly called QuickPath Interconnect, QPI, or KTI), FibreChannel, Ethernet, FibreChannel over Ethernet (FCoE), InfiniBand, PCI, PCIe, fiber optics, millimeter wave guide, an internet architecture, a packet data network (PDN) offering a communications interface or exchange between any two nodes in a system, a local area network (LAN), metropolitan area network (MAN), wide area network (WAN), wireless local area network (WLAN), virtual private network (VPN), intranet, plain old telephone system (POTS), or any other appropriate architecture or system that facilitates communications in a network or telephonic environment, either with or without human interaction or intervention. A network interface may include one or more physical ports that may couple to a cable (e.g., an Ethernet cable, other cable, or waveguide).

In some cases, some or all of the components of hardware platform 800 may be virtualized, in particular the processor(s) and memory. For example, a virtualized environment may run on OS 806, or OS 806 could be replaced with a hypervisor or virtual machine manager. In this configuration, a virtual machine running on hardware platform 800 may virtualize workloads. A virtual machine in this configuration may perform essentially all of the functions of a physical hardware platform.

In a general sense, any suitably-configured processor can execute any type of instructions associated with the data to achieve the operations illustrated in this specification. Any of the processors or cores disclosed herein could transform an element or an article (for example, data) from one state or thing to another state or thing. In another example, some activities outlined herein may be implemented with fixed logic or programmable logic (for example, software and/or computer instructions executed by a processor).

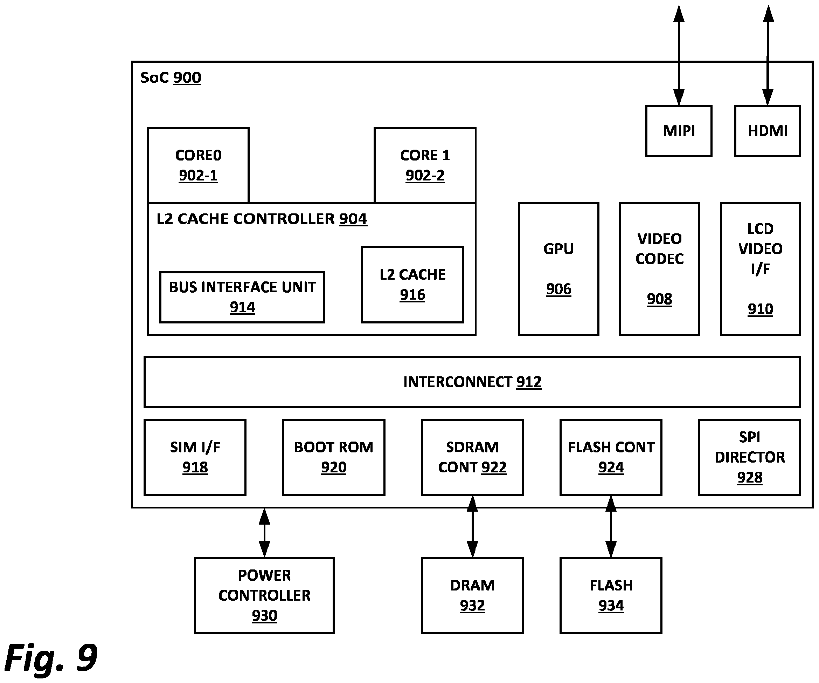

Various components of the system depicted in FIGURE 8 may be combined in a SoC architecture or in any other suitable configuration. For example, embodiments disclosed herein can be incorporated into systems including mobile devices such as smart cellular telephones, tablet computers, personal digital assistants, portable gaming devices, and similar. These mobile devices may be provided with SoC architectures in at least some embodiments. An example of such an embodiment is provided in FIGURE 9. Such an SoC (and any other hardware platform disclosed herein) may include analog, digital, and/or mixed-signal, radio frequency (RF), or similar processing elements. Other embodiments may include a multichip module (MCM), with a plurality of chips located within a single electronic package and configured to interact closely with each other through the electronic package. In various other embodiments, the computing functionalities disclosed herein may be implemented in one or more silicon cores in application-specific integrated circuits (ASICs), FPGAs, and other semiconductor chips.

**FIGURE 9** is a block illustrating selected elements of an example SoC 900. At least some of the teachings of the present specification may be embodied on an SoC 900, or may be paired with an SoC 900. SoC 900 may include, or may be paired with, an advanced reduced instruction set computer machine (ARM) component. For example, SoC 900 may include or be paired with any ARM core, such as A-9, A-15, or similar. This architecture represents a hardware platform that may be useful in devices such as tablets and smartphones, by way of illustrative example, including Android phones or tablets, iPhone (of any version), iPad, Google Nexus, Microsoft Surface. SoC 900 could also be integrated into, for example, a PC, server, video processing components, laptop computer, notebook computer, netbook, or touch-enabled device.

As with hardware platform 800 above, SoC 900 may include multiple cores 902-1 and 902-2. In this illustrative example, SoC 900 also includes an L2 cache control 904, a GPU 906, a video codec 908, a liquid crystal display (LCD) I/F 910 and an interconnect 912. L2 cache control 904 can include a bus interface unit 914, a L2 cache 916. Liquid crystal display (LCD) I/F 910 may be associated with mobile industry processor interface (MIPI)/ HDMI links that couple to an LCD.

SoC 900 may also include a subscriber identity module (SIM) I/F 918, a boot ROM 920, a synchronous dynamic random access memory (SDRAM) controller 922, a flash controller 924, a serial peripheral interface (SPI) director 928, a suitable power control 930, a dynamic RAM (DRAM) 932, and flash 934. In addition, one or more embodiments include one or more communication capabilities, interfaces, and features such as instances of Bluetooth, a 3G modem, a global positioning system (GPS), and an 802.11 Wi-Fi.

Designers of integrated circuits such as SoC 900 (or other integrated circuits) may use intellectual property blocks (IP blocks) to simplify system design. An IP block is a modular, self-contained hardware block that can be easily integrated into the design. Because the IP block is modular and self-contained, the integrated circuit (IC) designer need only "drop in" the IP block to use the functionality of the IP block. The system designer can then make the appropriate connections to inputs and outputs.

IP blocks are often "black boxes." In other words, the system integrator using the IP block may not know, and need not know, the specific implementation details of the IP block. Indeed, IP blocks may be provided as proprietary third-party units, with no insight into the design of the IP block by the system integrator.

For example, a system integrator designing an SoC for a smart phone may use IP blocks in addition to the processor core, such as a memory controller, a nonvolatile memory (NVM) controller, Wi-Fi, Bluetooth, GPS, a fourth or fifth-generation network (4G or 5G), an audio processor, a video processor, an image processor, a graphics engine, a GPU engine, a security controller, and many other IP blocks. In many cases, each of these IP blocks has its own embedded microcontroller.

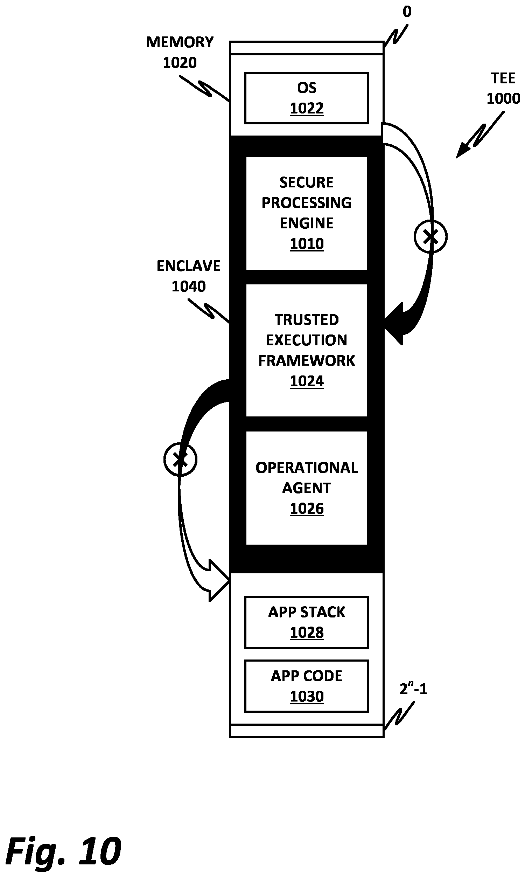

**FIGURE 10** is a block diagram of a TEE 1000. A TEE 1000 may be useful in cases where code transformations are passed between a client device and a server. For example, a TEE can be used to cryptographically attest the integrity of the data passed between the machines, and may also ensure that the data are secure and encrypted.

In the example of FIGURE 10, memory 1020 is addressable by n-bits, ranging in address from 0 to 2*ⁿ* - 1 (note, however, that in many cases, the size of the address space may far exceed the actual memory available). Within memory 1020 is an OS 1022, enclave 1040, application stack 1020, and application code 1030.

In this example, enclave 1040 is a specially-designated portion of memory 1020 that cannot be entered into or exited from except via special instructions, such as Intel Software Guard Extensions (SGX) or similar. Enclave 1040 is provided as an example of a secure environment which, in conjunction with a secure processing engine 1010, forms a TEE 1000 on a hardware platform such as platform 800 of FIGURE 8. A TEE 1000 is a combination of hardware, software, and/or memory allocation that provides the ability to securely execute instructions without interference from outside processes, in a verifiable way. By way of example, TEE 1000 may include memory enclave 1040 or some other protected memory area, and a secure processing engine 1010, which includes hardware, software, and instructions for accessing and operating on enclave 1040. Nonlimiting examples of solutions that either are or that can provide a TEE include Intel SGX, ARM TrustZone, AMD Platform Security Processor, Kinibi, securiTEE, OP-TEE, TLK, T6, Open TEE, SierraTEE, CSE, VT-x, MemCore, Canary Island, Docker, and Smack. Thus, it should be noted that in an example, secure processing engine 1010 may be a user-mode application that operates via trusted execution framework 1024 within enclave 1040. TEE 1000 may also conceptually include processor instructions that secure processing engine 1010 and trusted execution framework 1024 require to operate within enclave 1040.

Secure processing engine 1010 and trusted execution framework 1024 may together form a trusted computing base (TCB), which is a set of programs or computational units that are trusted to be secure. Conceptually, it may be advantageous to keep TCB relatively small so that there are fewer attack vectors for malware objects or for negligent software. Thus, for example, operating system 1022 may be excluded from TCB, in addition to the regular application stack 1028 and application code 1030.

An operational agent 1026 is located within the TCB, and provides functionality consistent with the teachings of this specification. For example, operational agent 1026 may provide communications between a client device with an IDE and plugin that perform code transformation. The communication may be with a code transformation server, which performs the code transformations. With secure attestation, both devices can ensure the integrity of the transactions.

In certain systems, computing devices equipped with Intel SGX or equivalent instructions may be capable of providing an enclave 1040. It should be noted, however, that many other examples of TEEs are available, and TEE 1000 is provided only as one example thereof. Other secure environments may include, by way of nonlimiting example, a virtual machine, sandbox, testbed, test machine, or other similar device or method for providing a TEE 1000.

In an example, enclave 1040 provides a protected memory area that cannot be accessed or manipulated by ordinary computer instructions. Enclave 1040 is described with particular reference to an Intel SGX enclave by way of example, but it is intended that enclave 1040 encompass any secure processing area with suitable properties, regardless of whether it is called an "enclave."

One feature of an enclave is that once an enclave region 1040 of memory 1020 is defined, as illustrated, a program pointer cannot enter or exit enclave 1040 without the use of special enclave instructions or directives, such as those provided by Intel SGX architecture. For example, SGX^{™} processors provide the ENCLU[EENTER], ENCLU[ERESUME], and ENCLU[EEXIT]. These are the only instructions that may legitimately enter into or exit from enclave 1040.

Thus, once enclave 1040 is defined in memory 804, a program executing within enclave 1040 may be safely verified to not operate outside of its bounds. This security feature means that secure processing engine 1010 is verifiably local to enclave 1040. Thus, when an untrusted packet provides its content to be rendered with trusted execution framework 1024 of enclave 1040, the result of the rendering is verified as secure.

Enclave 1040 may also digitally sign its output, which provides a verifiable means of ensuring that content has not been tampered with or modified since being rendered by secure processing engine 1010. A digital signature provided by enclave 1040 is unique to enclave 1040 and is unique to the hardware of the device hosting enclave 1040.

**FIGURE 11** is a block diagram of a NFV infrastructure 1100. NFV is an example of virtualization, and the virtualization infrastructure here can also be used to realize traditional VMs. Various functions described above may be realized as VMs. For example, a code transformation module (or components thereof) may be hosted on a VM. A VM may also provide a virtual desktop, which the user can login to and access an IDE for software development.

NFV is generally considered distinct from software defined networking (SDN), but they can interoperate together, and the teachings of this specification should also be understood to apply to SDN in appropriate circumstances. For example, virtual network functions (VNFs) may operate within the data plane of an SDN deployment. NFV was originally envisioned as a method for providing reduced capital expenditure (Capex) and operating expenses (Opex) for telecommunication services. One feature of NFV is replacing proprietary, special-purpose hardware appliances with virtual appliances running on commercial off-the-shelf (COTS) hardware within a virtualized environment. In addition to Capex and Opex savings, NFV provides a more agile and adaptable network. As network loads change, VNFs can be provisioned ("spun up") or removed ("spun down") to meet network demands. For example, in times of high load, more load balancing VNFs may be spun up to distribute traffic to more workload servers (which may themselves be VMs). In times when more suspicious traffic is experienced, additional firewalls or deep packet inspection (DPI) appliances may be needed.

Because NFV started out as a telecommunications feature, many NFV instances are focused on telecommunications. However, NFV is not limited to telecommunication services. In a broad sense, NFV includes one or more VNFs running within a network function virtualization infrastructure (NFVI), such as NFVI 1100. Often, the VNFs are inline service functions that are separate from workload servers or other nodes. These VNFs can be chained together into a service chain, which may be defined by a virtual subnetwork, and which may include a serial string of network services that provide behind-the-scenes work, such as security, logging, billing, and similar.

In the example of FIGURE 11, an NFV orchestrator 1101 may manage several VNFs 1112 running on an NFVI 1100. NFV requires nontrivial resource management, such as allocating a very large pool of compute resources among appropriate numbers of instances of each VNF, managing connections between VNFs, determining how many instances of each VNF to allocate, and managing memory, storage, and network connections. This may require complex software management, thus making NFV orchestrator 1101 a valuable system resource. Note that NFV orchestrator 1101 may provide a browser-based or graphical configuration interface, and in some embodiments may be integrated with SDN orchestration functions.

Note that NFV orchestrator 1101 itself may be virtualized (rather than a special-purpose hardware appliance). NFV orchestrator 1101 may be integrated within an existing SDN system, wherein an operations support system (OSS) manages the SDN. This may interact with cloud resource management systems (e.g., OpenStack) to provide NFV orchestration. An NFVI 1100 may include the hardware, software, and other infrastructure to enable VNFs to run. This may include a hardware platform 1102 on which one or more VMs 1104 may run. For example, hardware platform 1102-1 in this example runs VMs 1104-1 and 1104-2. Hardware platform 1102-2 runs VMs 1104-3 and 1104-4. Each hardware platform 1102 may include a respective hypervisor 1120, virtual machine manager (VMM), or similar function, which may include and run on a native (bare metal) operating system, which may be minimal so as to consume very few resources. For example, hardware platform 1102-1 has hypervisor 1120-1, and hardware platform 1102-2 has hypervisor 1120-2.

Hardware platforms 1102 may be or comprise a rack or several racks of blade or slot servers (including, e.g., processors, memory, and storage), one or more data centers, other hardware resources distributed across one or more geographic locations, hardware switches, or network interfaces. An NFVI 1100 may also include the software architecture that enables hypervisors to run and be managed by NFV orchestrator 1101.

Running on NFVI 1100 are VMs 1104, each of which in this example is a VNF providing a virtual service appliance. Each VM 1104 in this example includes an instance of the Data Plane Development Kit (DPDK) 1116, a virtual operating system 1108, and an application providing the VNF 1112. For example, VM 1104-1 has virtual OS 1108-1, DPDK 1116-1, and VNF 1112-1. VM 1104-2 has virtual OS 1108-2, DPDK 1116-2, and VNF 1112-2. VM 1104-3 has virtual OS 1108-3, DPDK 1116-3, and VNF 1112-3. VM 1104-4 has virtual OS 1108-4, DPDK 1116-4, and VNF 1112-4.

Virtualized network functions could include, as nonlimiting and illustrative examples, firewalls, intrusion detection systems, load balancers, routers, session border controllers, DPI services, network address translation (NAT) modules, or call security association.

The illustration of FIGURE 11 shows that a number of VNFs 1104 have been provisioned and exist within NFVI 1100. This FIGURE does not necessarily illustrate any relationship between the VNFs and the larger network, or the packet flows that NFVI 1100 may employ.

The illustrated DPDK instances 1116 provide a set of highly-optimized libraries for communicating across a virtual switch (vSwitch) 1122. Like VMs 1104, vSwitch 1122 is provisioned and allocated by a hypervisor 1120. The hypervisor uses a network interface to connect the hardware platform to the data center fabric (e.g., a host fabric interface (HFI)). This HFI may be shared by all VMs 1104 running on a hardware platform 1102. Thus, a vSwitch may be allocated to switch traffic between VMs 1104. The vSwitch may be a pure software vSwitch (e.g., a shared memory vSwitch), which may be optimized so that data are not moved between memory locations, but rather, the data may stay in one place, and pointers may be passed between VMs 1104 to simulate data moving between ingress and egress ports of the vSwitch. The vSwitch may also include a hardware driver (e.g., a hardware network interface IP block that switches traffic, but that connects to virtual ports rather than physical ports). In this illustration, a distributed vSwitch 1122 is illustrated, wherein vSwitch 1122 is shared between two or more physical hardware platforms 1102.

**FIGURE 12** is a block diagram of selected elements of a containerization infrastructure 1200. Like virtualization, containerization is a popular form of providing a guest infrastructure. Various functions described herein may be containerized, such as various backend code transformation functions.

Containerization infrastructure 1200 runs on a hardware platform such as containerized server 1204. Containerized server 1204 may provide processors, memory, one or more network interfaces, accelerators, and/or other hardware resources.

Running on containerized server 1204 is a shared kernel 1208. One distinction between containerization and virtualization is that containers run on a common kernel with the main operating system and with each other. In contrast, in virtualization, the processor and other hardware resources are abstracted or virtualized, and each virtual machine provides its own kernel on the virtualized hardware.

Running on shared kernel 1208 is main operating system 1212. Commonly, main operating system 1212 is a Unix or Linux-based operating system, although containerization infrastructure is also available for other types of systems, including Microsoft Windows systems and Macintosh systems. Running on top of main operating system 1212 is a containerization layer 1216. For example, Docker is a popular containerization layer that runs on a number of operating systems, and relies on the Docker daemon. Newer operating systems (including Fedora Linux 32 and later) that use version 2 of the kernel control groups service (cgroups v2) feature appear to be incompatible with the Docker daemon. Thus, these systems may run with an alternative known as Podman that provides a containerization layer without a daemon.

Various factions debate the advantages and/or disadvantages of using a daemon-based containerization layer (e.g., Docker) versus one without a daemon (e.g., Podman). Such debates are outside the scope of the present specification, and when the present specification speaks of containerization, it is intended to include any containerization layer, whether it requires the use of a daemon or not.

Main operating system 1212 may also provide services 1218, which provide services and interprocess communication to userspace applications 1220.

Services 1218 and userspace applications 1220 in this illustration are independent of any container.

As discussed above, a difference between containerization and virtualization is that containerization relies on a shared kernel. However, to maintain virtualization-like segregation, containers do not share interprocess communications, services, or many other resources. Some sharing of resources between containers can be approximated by permitting containers to map their internal file systems to a common mount point on the external file system. Because containers have a shared kernel with the main operating system 1212, they inherit the same file and resource access permissions as those provided by shared kernel 1208. For example, one popular application for containers is to run a plurality of web servers on the same physical hardware. The Docker daemon provides a shared socket, docker.sock, that is accessible by containers running under the same Docker daemon. Thus, one container can be configured to provide only a reverse proxy for mapping hypertext transfer protocol (HTTP) and hypertext transfer protocol secure (HTTPS) requests to various containers. This reverse proxy container can listen on docker.sock for newly spun up containers. When a container spins up that meets certain criteria, such as by specifying a listening port and/or virtual host, the reverse proxy can map HTTP or HTTPS requests to the specified virtual host to the designated virtual port. Thus, only the reverse proxy host may listen on ports 80 and 443, and any request to subdomain1.example.com may be directed to a virtual port on a first container, while requests to subdomain2.example.com may be directed to a virtual port on a second container.

Other than this limited sharing of files or resources, which generally is explicitly configured by an administrator of containerized server 1204, the containers themselves are completely isolated from one another. However, because they share the same kernel, it is relatively easier to dynamically allocate compute resources such as CPU time and memory to the various containers. Furthermore, it is common practice to provide only a minimum set of services on a specific container, and the container does not need to include a full bootstrap loader because it shares the kernel with a containerization host (i.e. containerized server 1204).

Thus, "spinning up" a container is often relatively faster than spinning up a new virtual machine that provides a similar service. Furthermore, a containerization host does not need to virtualize hardware resources, so containers access those resources natively and directly. While this provides some theoretical advantages over virtualization, modern hypervisors-especially type 1, or "bare metal," hypervisors-provide such near-native performance that this advantage may not always be realized.

In this example, containerized server 1204 hosts two containers, namely container 1230 and container 1240.

Container 1230 may include a minimal operating system 1232 that runs on top of shared kernel 1208. Note that a minimal operating system is provided as an illustrative example, and is not mandatory. In fact, container 1230 may perform as full an operating system as is necessary or desirable. Minimal operating system 1232 is used here as an example simply to illustrate that in common practice, the minimal operating system necessary to support the function of the container (which in common practice, is a single or monolithic function) is provided.

On top of minimal operating system 1232, container 1230 may provide one or more services 1234. Finally, on top of services 1234, container 1230 may also provide userspace applications 1236, as necessary.

Container 1240 may include a minimal operating system 1242 that runs on top of shared kernel 1208. Note that a minimal operating system is provided as an illustrative example, and is not mandatory. In fact, container 1240 may perform as full an operating system as is necessary or desirable. Minimal operating system 1242 is used here as an example simply to illustrate that in common practice, the minimal operating system necessary to support the function of the container (which in common practice, is a single or monolithic function) is provided.

On top of minimal operating system 1242, container 1240 may provide one or more services 1244. Finally, on top of services 1244, container 1240 may also provide userspace applications 1246, as necessary.

Using containerization layer 1216, containerized server 1204 may run discrete containers, each one providing the minimal operating system and/or services necessary to provide a particular function. For example, containerized server 1204 could include a mail server, a web server, a secure shell server, a file server, a weblog, cron services, a database server, and many other types of services. In theory, these could all be provided in a single container, but security and modularity advantages are realized by providing each of these discrete functions in a discrete container with its own minimal operating system necessary to provide those services.

The foregoing outlines features of several embodiments so that those skilled in the art may better understand various aspects of the present disclosure. The foregoing detailed description sets forth examples of apparatuses, methods, and systems relating to a system for providing source code tranformation accordance with one or more embodiments of the present disclosure. Features such as structure(s), function(s), and/or characteristic(s), for example, are described with reference to one embodiment as a matter of convenience; various embodiments may be implemented with any suitable one or more of the described features.

As used throughout this specification, the phrase "an embodiment" is intended to refer to one or more embodiments. Furthermore, different uses of the phrase "an embodiment" may refer to different embodiments. The phrases "in another embodiment" or "in a different embodiment" refer to an embodiment different from the one previously described, or the same embodiment with additional features. For example, "in an embodiment, features may be present. In another embodiment, additional features may be present." The foregoing example could first refer to an embodiment with features A, B, and C, while the second could refer to an embodiment with features A, B, C, and D, with features, A, B, and D, with features, D, E, and F, or any other variation.

In the foregoing description, various aspects of the illustrative implementations may be described using terms commonly employed by those skilled in the art to convey the substance of their work to others skilled in the art. It will be apparent to those skilled in the art that the embodiments disclosed herein may be practiced with only some of the described aspects. For purposes of explanation, specific numbers, materials, and configurations are set forth to provide a thorough understanding of the illustrative implementations. In some cases, the embodiments disclosed may be practiced without specific details. In other instances, well-known features are omitted or simplified so as not to obscure the illustrated embodiments.

For the purposes of the present disclosure and the appended claims, the article "a" refers to one or more of an item. The phrase "A or B" is intended to encompass the "inclusive or," e.g., A, B, or (A and B). "A and/or B" means A, B, or (A and B). For the purposes of the present disclosure, the phrase "A, B, and/or C" means A, B, C, (A and B), (A and C), (B and C), or (A, B, and C).

The embodiments disclosed can readily be used as the basis for designing or modifying other processes and structures to carry out the teachings of the present specification. Any equivalent constructions to those disclosed do not depart from the spirit and scope of the present disclosure. Design considerations may result in substitute arrangements, design choices, device possibilities, hardware configurations, software implementations, and equipment options.

As used throughout this specification, a "memory" is expressly intended to include both a volatile memory and a nonvolatile memory. Thus, for example, an "engine" as described above could include instructions encoded within a volatile or nonvolatile memory that, when executed, instruct a processor to perform the operations of any of the methods or procedures disclosed herein. It is expressly intended that this configuration reads on a computing apparatus "sitting on a shelf" in a non-operational state. For example, in this example, the "memory" could include one or more tangible, nontransitory computer-readable storage media that contain stored instructions. These instructions, in conjunction with the hardware platform (including a processor) on which they are stored may constitute a computing apparatus.

In other embodiments, a computing apparatus may also read on an operating device. For example, in this configuration, the "memory" could include a volatile or run-time memory (e.g., RAM), where instructions have already been loaded. These instructions, when fetched by the processor and executed, may provide methods or procedures as described herein.

In yet another embodiment, there may be one or more tangible, nontransitory computer-readable storage media having stored thereon executable instructions that, when executed, cause a hardware platform or other computing system, to carry out a method or procedure. For example, the instructions could be executable object code, including software instructions executable by a processor. The one or more tangible, nontransitory computer-readable storage media could include, by way of illustrative and nonlimiting example, a magnetic media (e.g., hard drive), a flash memory, a ROM, optical media (e.g., CD, DVD, Blu-Ray), nonvolatile random-access memory (NVRAM), nonvolatile memory (NVM) (e.g., Intel 3D Xpoint), or other nontransitory memory.

There are also provided herein certain methods, illustrated for example in flow charts and/or signal flow diagrams. The order or operations disclosed in these methods discloses one illustrative ordering that may be used in some embodiments, but this ordering is not intended to be restrictive, unless expressly stated otherwise. In other embodiments, the operations may be carried out in other logical orders. In general, one operation should be deemed to necessarily precede another only if the first operation provides a result required for the second operation to execute. Furthermore, the sequence of operations itself should be understood to be a nonlimiting example. In appropriate embodiments, some operations may be omitted as unnecessary or undesirable. In the same or in different embodiments, other operations not shown may be included in the method to provide additional results.

In certain embodiments, some of the components illustrated herein may be omitted or consolidated. In a general sense, the arrangements depicted in the FIGURES may be more logical in their representations, whereas a physical architecture may include various permutations, combinations, and/or hybrids of these elements.

With the numerous examples provided herein, interaction may be described in terms of two, three, four, or more electrical components. These descriptions are provided for purposes of clarity and example only. Any of the illustrated components, modules, and elements of the FIGURES may be combined in various configurations, all of which fall within the scope of this specification.

In certain cases, it may be easier to describe one or more functionalities by disclosing only selected elements. Such elements are selected to illustrate specific information to facilitate the description. The inclusion of an element in the FIGURES is not intended to imply that the element must appear in the disclosure, as claimed, and the exclusion of certain elements from the FIGURES is not intended to imply that the element is to be excluded from the disclosure as claimed. Similarly, any methods or flows illustrated herein are provided by way of illustration only. Inclusion or exclusion of operations in such methods or flows should be understood the same as inclusion or exclusion of other elements as described in this paragraph. Where operations are illustrated in a particular order, the order is a nonlimiting example only. Unless expressly specified, the order of operations may be altered to suit a particular embodiment.

Other changes, substitutions, variations, alterations, and modifications will be apparent to those skilled in the art. All such changes, substitutions, variations, alterations, and modifications fall within the scope of this specification.

To aid the United States Patent and Trademark Office (USPTO) and, any readers of any patent or publication flowing from this specification, the Applicant: (a) does not intend any of the appended claims to invoke paragraph (f) of 35 U.S.C. section 112, or its equivalent, as it exists on the date of the filing hereof unless the words "means for" or "steps for" are specifically used in the particular claims; and (b) does not intend, by any statement in the specification, to limit this disclosure in any way that is not otherwise expressly reflected in the appended claims, as originally presented or as amended.

## Claims

1. A method of providing protected access to a third-party generative artificial intelligence (GAI) for software development, comprising:
transforming a source code input (a transformed source code) via a one-way transform, wherein an enterprise has a proprietary interest in the source code input, and wherein the one-way transform is not internally reversible;
providing the transformed source code to the third-party GAI, in association with a query for the third-party GAI, wherein the third-party GAI is controlled by a party other than the enterprise;
receiving from the third-party GAI a response to the query; and
presenting the response to a human user via a human interface device (HID).

2. The method of claim 1, wherein the response includes a modified transformed source code, and further comprising using a transformation symbols store to reverse transform the modified transformed source code (a modified source code input) and presenting the reverse-transformed modified source code input to the human user via the HID.

3. The method of claim 2, further comprising storing the transformations symbols store only in volatile memory.

4. The method of one of the preceding claims, wherein transforming the source code input comprises replacing function calls, variable names, scope names, and literals with values that do not have human-perceptible meaning.

5. The method of one of the preceding claims, wherein transforming the source code input comprises excluding from transformation system call, scope names, variables, parameters, default values, members, and function calls that belong to an external API or framework.

6. The method of one of the preceding claims, wherein transforming the source code input comprises retaining numerical values.

7. The method of one of the preceding claims, further comprising providing an image processor to track eye or head movement and to provide contextual hints based on an area of a screen a user views.

8. The method of one of the preceding claims, further comprising providing the one-way transform as a backend service.

9. The method of one of the preceding claims, further comprising providing the one-way transform as a plugin to an integrated development environment (IDE).

10. The method of claim 9, further comprising providing the one-way transform as a background service for the IDE, and providing real-time hints to improve or correct the source code input.

11. An apparatus comprising means for performing the method of any of claims 1 - 10.

12. The apparatus of claim 11, wherein the means for performing the method comprise a processor and a memory.

13. The apparatus of claim 12, wherein the memory comprises machine-readable instructions that, when executed, cause the apparatus to perform the method of any of claims 1 - 10.

14. The apparatus of any of claims 11 - 13, wherein the apparatus is a computing system.

15. At least one computer readable medium comprising instructions that, when executed, implement a method or realize an apparatus as claimed in any of claims 1 - 14.
